(19) **Europäisches Patentamt**
**European Patent Office**
**Office européen des brevets**

(11) **EP 4 518 554 A1**

(12) **EUROPEAN PATENT APPLICATION**
published in accordance with Art. 153(4) EPC

(43) Date of publication:
**05.03.2025 Bulletin 2025/10**

(21) Application number: **23796781.5**

(22) Date of filing: **26.04.2023**

(51) International Patent Classification (IPC):
*H04W 74/08* (2024.01)      *H04L 5/00* (2006.01)
*H04L 5/14* (2006.01)      *H04L 1/18* (2023.01)
*H04W 4/40* (2018.01)      *H04W 52/52* (2009.01)
*H04L 27/00* (2006.01)

(52) Cooperative Patent Classification (CPC):
**H04L 1/18; H04L 5/00; H04L 5/14; H04L 27/00;**
**H04W 4/40; H04W 52/52; H04W 74/08**

(86) International application number:
**PCT/KR2023/005656**

(87) International publication number:
**WO 2023/211138 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.04.2022 KR 20220053106**

(71) Applicant: **LG Electronics Inc.**
**Yeongdeungpo-gu**
**Seoul 07336 (KR)**

(72) Inventors:
• **MYUNG, Sechang**
  **Seoul 06772 (KR)**
• **YANG, Suckchel**
  **Seoul 06772 (KR)**
• **KIM, Seonwook**
  **Seoul 06772 (KR)**
• **LEE, Seungmin**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD OF TRANSMITTING OR RECEIVING SIDELINK SIGNAL AND DEVICE THEREFOR**

(57)    The present disclosure provides a method of transmitting a physical sidelink feedback channel (PSFCH) by a terminal in a wireless communication system. In particular, the method may comprise: receiving a physical sidelink control channel (PSCCH); receiving a first physical sidelink shared channel (PSSCH) on the basis of the PSCCH; performing listen before talk (LBT) for an LBT gap; and transmitting a PSFCH corresponding to the first PSSCH on the basis that the LBT has been successful, wherein the LBT gap is positioned immediately before the foremost symbol among symbols for the PSFCH, and transmission of a second PSSCH may continue to the LBT gap from a symbol immediately after the last symbol among symbols for the second PSSCH having been transmitted by the terminal before the PSFCH.

【Fig. 14】

**Description**

**TECHNICAL FIELD**

The present disclosure relates to a method of transmitting and receiving sidelink signals and apparatus therefor and, more particularly, to a method of performing a channel access procedure to transmit and receive sidelink signals in an unlicensed band and apparatus therefor.

**BACKGROUND**

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

**DISCLOSURE**

**TECHNICAL PROBLEM**

The present disclosure aims to provide a method of transmitting and receiving sidelink signals and apparatus for the same.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

In an aspect of the present disclosure, provided herein is a method of transmitting a physical sidelink feedback channel (PSFCH) by a user equipment (UE) in a wireless communication system. The method includes: receiving a physical sidelink control channel (PSCCH); receiving a first physical sidelink shared channel (PSSCH) based on the PSCCH; performing listen-before-talk (LBT) during an LBT gap; and transmitting a PSFCH related to the first PSSCH based on a success of the LBT. The LBT gap may be located immediately before an earliest symbol among symbols for the PSFCH. Transmission of a second PSSCH may continue from a symbol immediately after a last symbol among symbols for the second PSSCH transmitted by the UE before the PSFCH until the LBT gap.

In this case, a length of the LBT gap may be pre-configured or correspond to one of a plurality of LBT gap lengths, which is indicated by sidelink control information (SCI) included in the PSCCH.

The LBT gap may be included within a transmission-reception (Tx-Rx) switching period for the second PSSCH.

A number of symbols included in the Tx-Rx switching period may be determined based on a length of the LBT gap and a subcarrier spacing (SCS) of the symbols included in the Tx-Rx switching period.

The LBT may be performed within a channel occupancy time (COT) obtained by a base station or another UE.

A length of the LBT gap may be one of lengths for Type 2 LBT.

In another aspect of the present disclosure, provided herein is a UE configured to transmit a PSFCH in a wireless communication system. The UE may include: at least one transceiver; at least one processor; and at least one memory operatively connected to the at least one processor and storing instructions that, when executed, cause the at least one processor to perform operations. The operations include: receiving, through the at least one transceiver, a PSCCH; receiving, through the at least one transceiver, a first PSSCH based on the PSCCH; performing LBT during an LBT gap; and transmitting, through the at least one transceiver, a PSFCH related to the first PSSCH based on a success of the LBT. The LBT gap may be located immediately before an earliest symbol among symbols for the PSFCH. Transmission of a second PSSCH may continue from a symbol immediately after a last symbol among symbols for the second PSSCH transmitted by the UE before the PSFCH until the LBT gap.

In this case, a length of the LBT gap may be pre-configured or correspond to one of a plurality of LBT gap lengths, which is indicated by SCI included in the PSCCH.

The LBT gap may be included within a Tx-Rx switching period for the second PSSCH.

A number of symbols included in the Tx-Rx switching period may be determined based on a length of the LBT gap and an SCS of the symbols included in the Tx-Rx switching period.

The LBT may be performed within a COT obtained by a base station or another UE.

A length of the LBT gap may be one of lengths for Type 2 LBT.

In another aspect of the present disclosure, provided herein is an apparatus configured to transmit a PSFCH in a wireless communication system. The apparatus includes: at least one processor; and at least one memory operatively connected to the at least one processor and storing instructions that, when executed, cause the at least one processor to perform operations. The operations include: receiving a PSCCH; receiving a first PSSCH based on the PSCCH; performing LBT during an LBT gap; and transmitting a PSFCH related to the first PSSCH based on a success of the LBT. The LBT gap may be located immediately before an earliest symbol among symbols for the PSFCH. Transmission of a second PSSCH may continue from a symbol immediately after a last symbol among symbols for the second PSSCH transmitted by the UE before the PSFCH until the LBT gap.

In another aspect of the present disclosure, provided herein is a computer-readable storage medium including at least one computer program that causes at least one processor to perform operations. The operations include: receiving a PSCCH; receiving a first PSSCH based on the PSCCH; performing LBT during an LBT gap; and transmitting a PSFCH related to the first PSSCH based on a success of the LBT. The LBT gap may be located immediately before an earliest symbol among symbols for the PSFCH. Transmission of a second PSSCH may continue from a symbol immediately after a last symbol among symbols for the second PSSCH transmitted by the UE before the PSFCH until the LBT gap.

In another aspect of the present disclosure, provided herein is a method of receiving a PSFCH by a UE in a wireless communication system. The method includes: transmitting a PSCCH; transmitting a first PSSCH based on the PSCCH; and receiving a PSFCH related to the first PSSCH. The PSFCH may be received based on a success of LBT performed during an LBT gap located immediately before an earliest symbol among symbols for the PSFCH. Transmission of a second PSSCH may continue from a symbol immediately after a last symbol among symbols for the second PSSCH transmitted by another UE before the PSFCH until the LBT gap. The other UE may transmit the PSFCH.

In a further aspect of the present disclosure, provided herein is a UE configured to receive a PSFCH in a wireless communication system. The UE includes: at least one transceiver; at least one processor; and at least one memory operatively connected to the at least one processor and storing instructions that, when executed, cause the at least one processor to perform operations. The operations include: transmitting a PSCCH; transmitting a first PSSCH based on the PSCCH; and receiving a PSFCH related to the first PSSCH. The PSFCH may be received based on a success of LBT performed during an LBT gap located immediately before an earliest symbol among symbols for the PSFCH. Transmission of a second PSSCH may continue from a symbol immediately after a last symbol among symbols for the second PSSCH transmitted by another UE before the PSFCH until the LBT gap. The other UE may transmit the PSFCH.

## ADVANTAGEOUS EFFECTS

According to the present disclosure, a channel access procedure for sidelink transmission and reception in unlicensed bands may be performed by using an automatic gain control (AGC) period and a transmission-reception (Tx-Rx) switching period, where signal transmission and reception are not performed in existing sidelink communication. Thus, it is possible to efficiently transmit and receive sidelink signals in unlicensed bands while minimizing changes in the existing sidelink signal transmission and reception methods.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a wireless communication system supporting an unlicensed band;

FIG. 2 illustrates an exemplary method of occupying resources in an unlicensed band;

FIG. 3 illustrates an exemplary channel access procedure of a user equipment (UE) for uplink (UL) signal transmission and/or downlink (DL) signal transmission in an unlicensed band applicable to the present disclosure;

FIG. 4 is a diagram illustrating a plurality of listen-before-talk subbands (LBT-SBs) applicable to the present disclosure;

FIG. 5 is a diagram illustrating vehicle-to-everything (V2X) communication based on pre-new radio access technology (NR) RAT and V2X communication based on NR in comparison;

FIG. 6 is a diagram illustrating UEs which conduct V2X or sidelink (SL) communication between them according to an embodiment of the present disclosure;

FIG. 7 is a diagram illustrating signal flows for V2X or SL communication procedures of a UE according to transmission modes according to an embodiment of the present disclosure;

FIG. 8 is a diagram illustrating three cast types according to an embodiment of the present disclosure;

FIG. 9 is a diagram illustrating comparison between a long transmission time interval (L-TTI) and a short transmission time interval (S-TTI);

FIGS. 10 to 12 are diagrams for explaining an overall operational process between UEs according to embodiments of the present disclosure;

FIG. 13 is a diagram for explaining an exemplary transmission time of an SL channel according to the present disclosure;

FIG. 14 is a diagram for explaining an example of configuring an LBT gap for an SL channel according to the present disclosure;

FIG. 15 illustrates an exemplary communication system applied to the present disclosure;

FIG. 16 illustrates an exemplary wireless device applicable to the present disclosure; and

FIG. 17 illustrates an exemplary vehicle or autonomous driving vehicle applicable to the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

Similarly to licensed-assisted access (LAA) in the legacy 3GPP LTE system, use of an unlicensed band for cellular communication is also under consideration in a 3GPP NR system. Unlike LAA, a stand-along (SA) operation is aimed in an NR cell of an unlicensed band (hereinafter, referred to as NR unlicensed cell (UCell)). For example, PUCCH, PUSCH, and PRACH transmissions may be supported in the NR UCell.

On LAA UL, with the introduction of an asynchronous HARQ procedure, there is no additional channel such as a physical HARQ indicator channel (PHICH) for indicating HARQ-ACK information for a PUSCH to the UE. Therefore, accurate HARQ-ACK information may not be used to adjust a contention window (CW) size in a UL LBT procedure. In the UL LBT procedure, when a UL grant is received in the n-th subframe, the first subframe of the most recent UL transmission burst prior to the (n-3)-th subframe has been configured as a reference subframe, and the CW size has been adjusted based on a new data indicator (NDI) for a HARQ process ID corresponding to the reference subframe. That is, when the BS toggles NDIs per one or more transport blocks (TBs) or instructs that one or more TBs be retransmitted, a method has been introduced of increasing the CW size to the next largest CW size of a currently applied CW size in a set for pre-agreed CW sizes under the assumption that transmission of a PUSCH has failed in the reference subframe due to collision with other signals or initializing the CW size to a minimum value (e.g., CWmin) under the assumption that the PUSCH in the reference subframe has been successfully transmitted without any collision with other signals.

In an NR system to which various embodiments of the present disclosure are applicable, up to 400 MHz per component carrier (CC) may be allocated/supported. When a UE operating in such a wideband CC always operates with a radio frequency (RF) module turned on for the entire CC, battery consumption of the UE may increase.

Alternatively, considering various use cases (e.g., eMBB, URLLC, mMTC, and so on) operating within a single wideband CC, a different numerology (e.g., SCS) may be supported for each frequency band within the CC.

Alternatively, each UE may have a different maximum bandwidth capability.

In this regard, the BS may indicate to the UE to operate only in a partial bandwidth instead of the total bandwidth of the wideband CC. The partial bandwidth may be defined as a bandwidth part (BWP).

A BWP may be a subset of contiguous RBs on the frequency axis. One BWP may correspond to one numerology (e.g., SCS, CP length, slot/mini-slot duration, and so on).

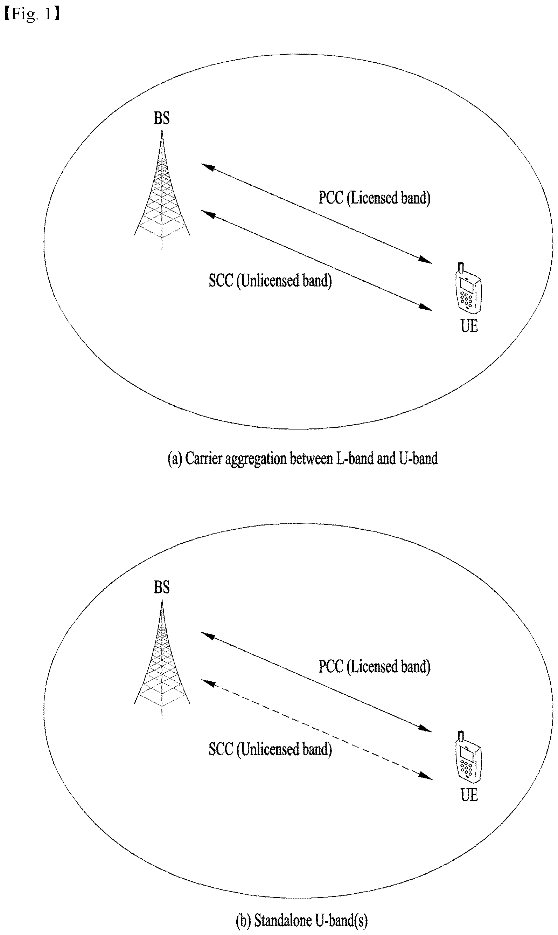

FIG. 1 illustrates an exemplary wireless communication system supporting an unlicensed band applicable to the present disclosure.

In the following description, a cell operating in a licensed band (L-band) is defined as an L-cell, and a carrier of the L-cell is defined as a (DL/UL) LCC. A cell operating in an unlicensed band (U-band) is defined as a U-cell, and a carrier of the U-cell is defined as a (DL/UL) UCC. The carrier/carrier-frequency of a cell may refer to the operating frequency (e.g., center frequency) of the cell. A cell/carrier (e.g., CC) is commonly called a cell.

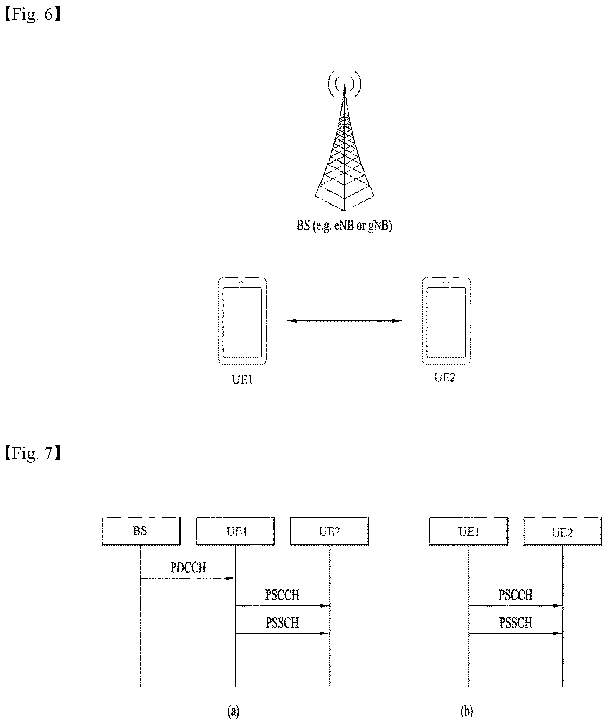

When a BS and a UE transmit and receive signals on carrier-aggregated LCC and UCC as illustrated in FIG. 7(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 7(b). In other words, the BS and UE may transmit and receive signals only on UCC(s) without using any LCC. For an SA operation, PRACH, PUCCH, PUSCH, and SRS transmissions may be supported on a UCell.

Signal transmission and reception operations in a U-band as described in the present disclosure may be applied to the afore-mentioned deployment scenarios (unless specified otherwise).

Unless otherwise noted, the definitions below are applicable to the following terminologies used in the present disclosure.

- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 $\mu$s. The BS or the UE senses the slot during a sensing slot duration. When power detected for at least 4us within the sensing slot duration is less than an energy detection threshold Xthresh, the sensing slot duration Tsl is be considered to be idle. Otherwise, the sensing slot duration Tsl is considered to be busy. CAP may also be called listen before talk (LBT).
- Channel occupancy: transmission(s) on channel(s) from the BS/UE after a CAP.
- Channel occupancy time (COT): a total time during which the BS/UE and any BS/UE(s) sharing channel occupancy performs transmission(s) on a channel after a CAP. Regarding COT determination, if a transmission gap is less than or equal to 25 $\mu$s, the gap duration may be counted in a COT.

The COT may be shared for transmission between the BS and corresponding UE(s).

Specifically, sharing a UE-initiated COT with the BS may mean an operation in which the UE assigns a part of occupied channels through random backoff-based LBT (e.g., Category 3 (Cat-3) LBT or Category 4 (Cat-4) LBT) to the BS and the BS performs DL transmission using a remaining COT of the UE, when it is confirmed that a channel is idle by success of LBT after performing LBT without random backoff (e.g., Category 1 (Cat-1) LBT or Category 2 (Cat-2) LBT) using a timing gap occurring before DL transmission start from a UL transmission end timing of the UE.

Meanwhile, sharing a gNB-initiated COT with the UE may mean an operation in which the BS assigns a part of occupied channels through random backoff-based LBT (e.g., Cat-3 LBT or Cat-4 LBT) to the UE and the UE performs UL transmission using a remaining COT of the BS, when it is confirmed that a channel is idle by success of LBT after performing LBT without random backoff (e.g., Cat-1 LBT or Cat-2 LBT) using a timing gap occurring before UL transmission start from a DL transmission end timing of the BS.

- DL transmission burst: a set of transmissions without any gap greater than 16 $\mu$s from the BS. Transmissions from the BS, which are separated by a gap exceeding 16 $\mu$s are considered as separate DL transmission bursts. The BS may perform transmission(s) after a gap without sensing channel availability within a DL transmission burst.
- UL transmission burst: a set of transmissions without any gap greater than 16 $\mu$s from the UE. Transmissions from the UE, which are separated by a gap exceeding 16 μs are considered as separate UL transmission bursts. The UE may perform transmission(s) after a gap without sensing channel availability within a DL transmission burst.

- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB1, the PDSCH carrying SIB1, and/or a non-zero power CSI-RS.

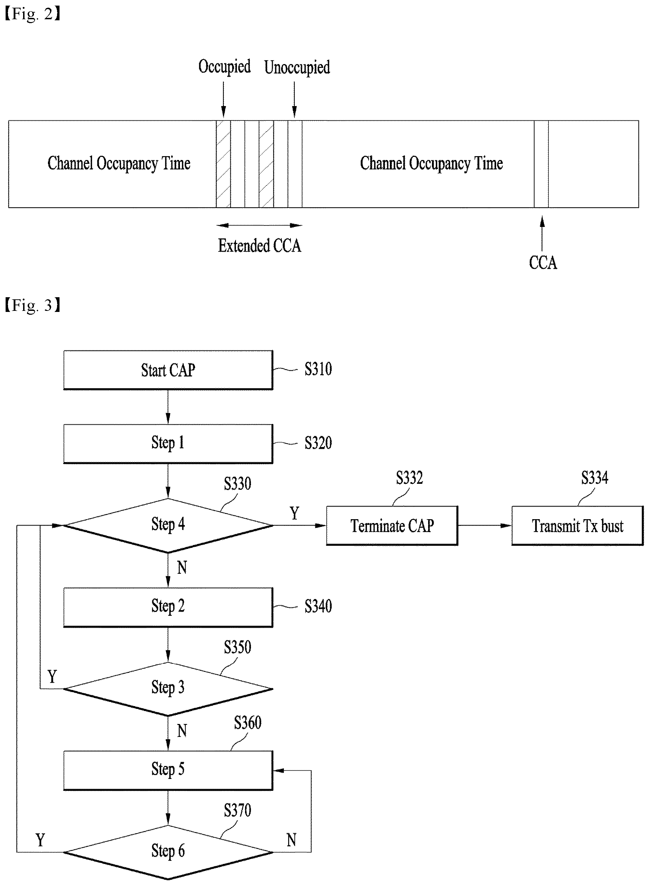

FIG. 2 illustrates an exemplary method of occupying resources in a U-band.

Referring to FIG. 2, a communication node (e.g., a BS or a UE) operating in a U-band should determine whether other communication node(s) is using a channel, before signal transmission. For this purpose, the communication node may perform a CAP to access channel(s) on which transmission(s) is to be performed in the U-band. The CAP may be performed based on sensing. For example, the communication node may determine whether other communication node(s) is transmitting a signal on the channel(s) by carrier sensing (CS) before signal transmission. Determining that other communication node(s) is not transmitting a signal is defined as confirmation of clear channel assessment (CCA). In the presence of a CCA threshold (e.g., Xthresh) which has been predefined or configured by higher-layer (e.g., RRC) signaling, the communication node may determine that the channel is busy, when detecting energy higher than the CCA threshold in the channel. Otherwise, the communication node may determine that the channel is idle. When determining that the channel is idle, the communication node may start to transmit a signal in the U-band. CAP may be replaced with LBT.

Table 1 describes an exemplary CAP supported in NR-U.

[Table 1]

|  | Type | Explanation |
|---|---|---|
| DL | Type 1 CAP | CAP with random back-off<br>- time duration spanned by the sensing slots that are sensed to be idle before a downlink transmission(s) is random |
|  | Type 2 CAP | CAP without random back-off |
|  | - Type 2A, 2B, 2C | - time duration spanned by sensing slots that are sensed to be idle before a downlink transmission(s) is deterministic |
| UL | Type 1 CAP | CAP with random back-off<br>- time duration spanned by the sensing slots that are sensed to be idle before a downlink transmission(s) is random |
|  | Type 2 CAP<br>- Type 2A, 2B, 2C | CAP without random back-off<br>- time duration spanned by sensing slots that are sensed to be idle before a downlink transmission(s) is deterministic |

In a wireless communication system supporting a U-band, one cell (or carrier (e.g., CC)) or BWP configured for a UE may be a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information. A plurality of LBT-SBs may be included in the BWP of a cell (or carrier). An LBT-SB may be, for example, a 20-MHz band. The LBT-SB may include a plurality of contiguous (P)RBs in the frequency domain, and thus may be referred to as a (P)RB set.

A UE performs a Type 1 or Type 2 CAP for a UL signal transmission in a U-band. In general, the UE may perform a CAP (e.g., Type 1 or Type 2) configured by a BS, for a UL signal transmission. For example, CAP type indication information may be included in a UL grant (e.g., DCI format 0_0 or DCI format 0_1) that schedules a PUSCH transmission.

In the Type 1 UL CAP, the length of a time period spanned by sensing slots sensed as idle before transmission(s) is random. The Type 1 UL CAP may be applied to the following transmissions.

- PUSCH/SRS transmission(s) scheduled and/or configured by BS
- PUCCH transmission(s) scheduled and/or configured by BS
- Transmission(s) related to random access procedure (RAP)

FIG. 3 illustrates Type 1 CAP among channel access procedures of a UE for UL/DL signal transmission in a U-band applicable to the present disclosure.

First, UL signal transmission in the U-band will be described with reference to FIG. 3.

The UE may sense whether a channel is idle for a sensing slot duration in a defer duration Td. After a counter N is decremented to 0, the UE may perform a transmission (S334). The counter N is adjusted by sensing the channel for additional slot duration(s) according to the following procedure.

Step 1) Set N=Ninit where Ninit is a random number uniformly distributed between 0 and CWp, and go to step 4 (S320).

Step 2) If N > 0 and the UE chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y) (S330), stop CAP (S332). Else (N), go to step 2.

Step 5) Sense the channel until a busy sensing slot is detected within the additional defer duration Td or all slots of the additional defer duration Td are sensed as idle (S360).

Step 6) If the channel is sensed as idle for all slot durations of the additional defer duration Td (Y), go to step 4. Else (N), go to step 5 (S370).

Table 2 illustrates that mp, a minimum CW, a maximum CW, a maximum channel occupancy time (MCOT), and an allowed CW size applied to a CAP vary according to channel access priority classes.

[Table 2]

| Channel A ccess Priori ty Class (p) | mp | CW min,p | CWm ax,p | Tulmcot,p | allowed CWp sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127, 255,511,1023} |
| 4 | 7 | 15 | 1023 | 6 or 10 ms | { 15,31,63,127, 255,511,1023} |

The defer duration Td includes a duration Tf (16 $\mu$s) immediately followed by mp consecutive slot durations where each slot duration Tsl is 9 $\mu$s, and Tf includes a sensing slot duration Tsl at the start of the 16-$\mu$s duration. CWmin,p <= CWp <= CWmax,p. CWp is set to CWmin,p, and may be updated before Step 1 based on an explicit/implicit reception response to a previous UL burst (e.g., PUSCH) (CW size update). For example, CWp may be initialized to CWmin,p based on an explicit/implicit reception response to the previous UL burst, may be increased to the next higher allowed value, or may be maintained to be an existing value.

In the Type 2 UL CAP, the length of a time period spanned by sensing slots sensed as idle before transmission(s) is deterministic. Type 2 UL CAPs are classified into Type 2A UL CAP, Type 2B UL CAP, and Type 2C UL CAP. In the Type 2A UL CAP, the UE may transmit a signal immediately after the channel is sensed as idle during at least a sensing duration Tshort_dl (=25 $\mu$s). Tshort_dl includes a duration Tf (=16 $\mu$s) and one immediately following sensing slot duration. In the Type 2A UL CAP, Tf includes a sensing slot at the start of the duration. In the Type 2B UL CAP, the UE may transmit a signal immediately after the channel is sensed as idle during a sensing slot duration Tf (=16 $\mu$s). In the Type 2B UL CAP, Tf includes a sensing slot within the last 9 $\mu$s of the duration. In the Type 2C UL CAP, the UE does not sense a channel before a transmission.

To allow the UE to transmit UL data in the U-band, the BS should succeed in an LBT operation to transmit a UL grant in the U-band, and the UE should also succeed in an LBT operation to transmit the UL data. That is, only when both of the BS and the UE succeed in their LBT operations, the UE may attempt the UL data transmission. Further, because a delay of at least 4 msec is involved between a UL grant and scheduled UL data in the LTE system, earlier access from another transmission node coexisting in the U-band during the time period may defer the scheduled UL data transmission of the UE. In this context, a method of increasing the efficiency of UL data transmission in the U-band is under discussion.

To support a UL transmission having a relatively high reliability and a relatively low time delay, NR also supports CG type 1 and CG type 2 in which the BS preconfigures time, frequency, and code resources for the UE by higher-layer signaling (e.g., RRC signaling) or both of higher-layer signaling and L1 signaling (e.g., DCI). Without receiving a UL grant from the BS, the UE may perform a UL transmission in resources configured with type 1 or type 2. In type 1, the periodicity of a CG, an offset from SFN=0, time/frequency resource allocation, a repetition number, a DMRS parameter, an MCS/TB size (TBS), a power control parameter, and so on are all configured only by higher-layer signaling such as RRC signaling, without L1 signaling. Type 2 is a scheme of configuring the periodicity of a CG and a power control parameter by higher-layer signaling such as RRC signaling and indicating information about the remaining resources (e.g., the offset of an initial transmission timing, time/frequency resource allocation, a DMRS parameter, and an MCS/TBS) by activation DCI as L1 signaling.

The biggest difference between autonomous uplink (AUL) of LTE LAA and a CG of NR is a HARQ-ACK feedback transmission method for a PUSCH that the UE has transmitted without receiving a UL grant and the presence or absence of UCI transmitted along with the PUSCH. While a HARQ process is determined by an equation of a symbol index, a symbol periodicity, and the number of HARQ processes in the CG of NR, explicit HARQ-ACK feedback information is transmitted in AUL downlink feedback information (AUL-DFI) in LTE LAA. Further, in LTE LAA, UCI including information such as a HARQ ID, an NDI, and an RV is also transmitted in AUL UCI whenever AUL PUSCH transmission is performed. In the case of the CG of NR, the BS identifies the UE by time/frequency resources and DMRS resources used for PUSCH transmission, whereas in the case of LTE LAA, the BS identifies the UE by a UE ID explicitly included in the AUL UCI transmitted together with the PUSCH as well as the DMRS resources.

Now, DL signal transmission in the U-band will be described with reference to FIG. 3.

The BS may perform one of the following U-band access procedures (e.g., channel access procedures (CAPs)) to transmit a DL signal in the U-band.

(1) Type 1 DL CAP method

In a Type 1 DL CAP, the length of a time duration spanned by sensing slots that are sensed to be idle before transmission(s) is random. The Type 1 DL CAP may be applied to the following transmissions:

- transmission(s) initiated by the BS, including (i) a unicast PDSCH with user plane data, or (ii) a unicast PDSCH with user plane data and a unicast PDCCH scheduling the user plane data; or
- transmission(s) initiated by the BS, including (i) only a discovery burst, or (ii) a discovery burst multiplexed with non-unicast information.

Referring to FIG. 3, the BS may first sense whether a channel is idle for a sensing slot duration of a defer duration Td. Next, if a counter N is decremented to 0, transmission may be performed (S334). The counter N is adjusted by sensing the channel for additional slot duration(s) according to the following procedures.

Step 1) Set N=Ninit where Ninit is a random number uniformly distributed between 0 and CWp, and go to step 4 (S320).

Step 2) If N > 0 and the BS chooses to decrement the counter, set N=N-1 (S340).

Step 3) Sense the channel for an additional slot duration, and if the additional slot duration is idle (Y), go to step 4. Else (N), go to step 5 (S350).

Step 4) If N=0 (Y), stop a CAP (S332)). Else (N), go to step 2 (S330).

Step 5) Sense the channel until a busy sensing slot is detected within the additional defer duration Td or all slots of the additional defer duration Td are sensed to be idle (S360).

Step 6) If the channel is sensed to be idle for all slot durations of the additional defer duration Td (Y), go to step 4. Else (N), go to step 5 (S370).

Table 3 illustrates that mp, a minimum CW, a maximum CW, an MCOT, and an allowed CW size, which are applied to a CAP, vary according to channel access priority classes.

[Table 3]

| Channel A ccess Priori ty Class (p) | $m_p$ | CWmin,p | CWm ax,p | Tmcot,p | allowed CWp sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127, 255,511,1023} |

The defer duration Td includes a duration Tf (16 $\mu$s) immediately followed by mp consecutive sensing slot durations where each sensing slot duration Tsl is 9 $\mu$s, and Tf includes the sensing slot duration Tsl at the start of the 16-$\mu$s duration.

CWmin,p <= CWp <= CWmax,p. CWp is set to CWmin,p, and may be updated (CW size update) before Step 1 based on HARQ-ACK feedback (e.g., ratio of ACK signals or NACK signals) for a previous DL burst (e.g., PDSCH). For example, CWp may be initialized to CWmin,p based on HARQ-ACK feedback for the previous DL burst, may be increased to the next highest allowed value, or may be maintained at an existing value.

(2) Type 2 DL CAP method

In a Type 2 DL CAP, the length of a time duration spanned by sensing slots sensed to be idle before transmission(s) is deterministic. Type 2 DL CAPs are classified into Type 2A DL CAP, Type 2B DL CAP, and Type 2C DL CAP.

The Type 2A DL CAP may be applied to the following transmissions. In the Type 2A DL CAP, the BS may transmit a signal immediately after a channel is sensed to be idle during at least a sensing duration Tshort_dl = 25 $\mu$s. Tshort_dl includes a duration Tf (= 16 $\mu$s) and one immediately following sensing slot duration. Tf includes the sensing slot at the start of the duration.

- Transmission(s) initiated by the BS, including (i) only a discovery burst, or (ii) a discovery burst multiplexed with non-unicast information, or
- Transmission(s) of the BS after a gap of 25 $\mu$s from transmission(s) by the UE within shared channel occupancy.

The Type 2B DL CAP is applicable to transmission(s) performed by the BS after a gap of 16 $\mu$s from transmission(s) by the UE within shared channel occupancy. In the Type 2B DL CAP, the BS may transmit a signal immediately after a channel is sensed to be idle during Tf=16 $\mu$s. Tf includes a sensing slot within the last 9 $\mu$s of the duration. The Type 2C DL CAP is applicable to transmission(s) performed by the BS after a maximum of a gap of 16 $\mu$s from transmission(s) by the UE within shared channel occupancy. In the Type 2C DL CAP, the BS does not sense a channel before performing transmission.

In a wireless communication system supporting a U-band, one cell (or carrier (e.g., CC)) or BWP configured for the UE may consist of a wideband having a larger BW than in legacy LTE. However, a BW requiring CCA based on an independent LBT operation may be limited according to regulations. If a subband (SB) in which LBT is individually performed is defined as an LBT-SB, a plurality of LBT-SBs may be included in one wideband cell/BWP. A set of RBs constituting an LBT-SB may be configured by higher-layer (e.g., RRC) signaling. Accordingly, one or more LBT-SBs may be included in one cell/BWP based on (i) the BW of the cell/BWP and (ii) RB set allocation information.

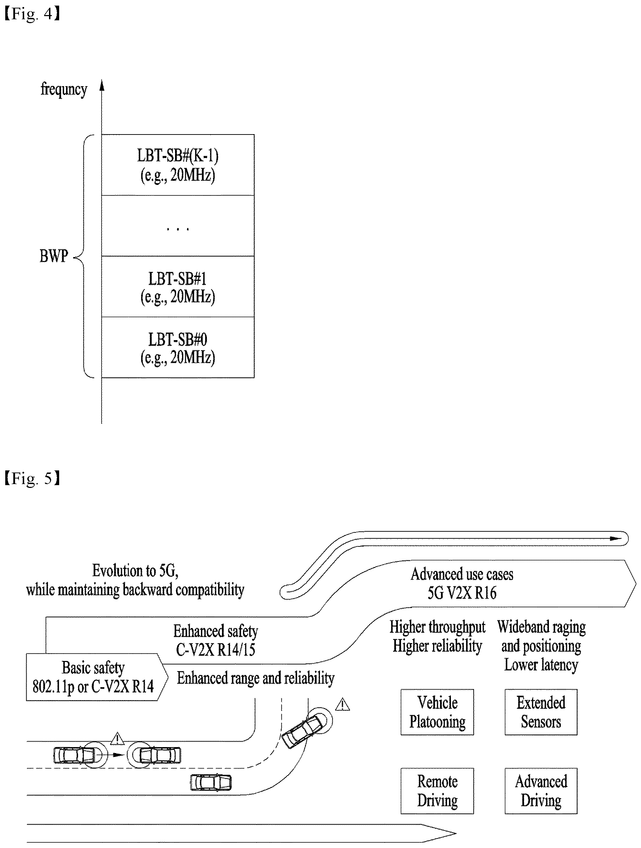

FIG. 4 illustrates that a plurality of LBT-SBs is included in a U-band.

Referring to FIG. 4, a plurality of LBT-SBs may be included in the BWP of a cell (or carrier). An LBT-SB may be, for example, a 20-MHz band. The LBT-SB may include a plurality of contiguous (P)RBs in the frequency domain and thus may be referred to as a (P)RB set. Although not illustrated, a guard band (GB) may be included between the LBT-SBs. Therefore, the BWP may be configured in the form of {LBT-SB #0 (RB set #0) + GB #0 + LBT-SB #1 (RB set #1 + GB #1) + ... + LBT-SB #(K-1) (RB set (#K-1))}. For convenience, LBT-SB/RB indexes may be configured/defined to be increased as a frequency band becomes higher starting from a low frequency band.

FIG. 5 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

FIG. 6 illustrates UEs that conduct V2X or SL communication between them according to an embodiment of the present disclosure.

Referring to FIG. 6, the term "UE" in V2X or SL communication may mainly refer to a terminal of a user. However, when network equipment such as a BS transmits and receives a signal according to a UE-to-UE communication scheme, the BS may also be regarded as a kind of UE. For example, a first UE (UE1) may be a first device 100 and a second UE (UE2) may be a second device 200.

For example, UE1 may select a resource unit corresponding to specific resources in a resource pool which is a set of resources. UE1 may then transmit an SL signal in the resource unit. For example, UE2, which is a receiving UE, may be configured with the resource pool in which UE1 may transmit a signal, and detect the signal from UE1 in the resource pool.

When UE1 is within the coverage of the BS, the BS may indicate the resource pool to UE1. On the contrary, when UE1 is outside the coverage of the BS, another UE may indicate the resource pool to UE1, or UE1 may use a predetermined resource pool.

In general, a resource pool may include a plurality of resource units, and each UE may select one or more resource units and transmit an SL signal in the selected resource units.

FIG. 7 illustrates a procedure of performing V2X or SL communication according to a transmission mode in a UE according to an embodiment of the present disclosure. In various embodiments of the present disclosure, a transmission mode may also be referred to as a mode or a resource allocation mode. For the convenience of description, a transmission mode in LTE may be referred to as an LTE transmission mode, and a transmission mode in NR may be referred to as an NR resource allocation mode.

For example, FIG. 7(a) illustrates a UE operation related to LTE transmission mode 1 or LTE transmission mode 3. Alternatively, for example, FIG. 7(a) illustrates a UE operation related to NR resource allocation mode 1. For example, LTE transmission mode 1 may be applied to general SL communication, and LTE transmission mode 3 may be applied to V2X communication.

For example, FIG. 7(b) illustrates a UE operation related to LTE transmission mode 2 or LTE transmission mode 4. Alternatively, for example, FIG. 7(b) illustrates a UE operation related to NR resource allocation mode 2.

Referring to FIG. 7(a), in LTE transmission mode 1, LTE transmission mode 3, or NR resource allocation mode 1, a BS may schedule SL resources to be used for SL transmission of a UE. For example, the BS may perform resource scheduling for UE1 through a PDCCH (more specifically, DL control information (DCI)), and UE1 may perform V2X or SL communication with UE2 according to the resource scheduling. For example, UE1 may transmit sidelink control information (SCI) to UE2 on a physical sidelink control channel (PSCCH), and then transmit data based on the SCI to UE2 on a physical sidelink shared channel (PSSCH).

For example, in NR resource allocation mode 1, a UE may be provided with or allocated resources for one or more SL transmissions of one transport block (TB) by a dynamic grant from the BS. For example, the BS may provide the UE with resources for transmission of a PSCCH and/or a PSSCH by the dynamic grant. For example, a transmitting UE may report an SL hybrid automatic repeat request (SL HARQ) feedback received from a receiving UE to the BS. In this case, PUCCH resources and a timing for reporting the SL HARQ feedback to the BS may be determined based on an indication in a PDCCH, by which the BS allocates resources for SL transmission.

For example, the DCI may indicate a slot offset between the DCI reception and a first SL transmission scheduled by the DCI. For example, a minimum gap between the DCI that schedules the SL transmission resources and the resources of the first scheduled SL transmission may not be smaller than a processing time of the UE.

For example, in NR resource allocation mode 1, the UE may be periodically provided with or allocated a resource set for a plurality of SL transmissions through a configured grant from the BS. For example, the grant to be configured may include configured grant type 1 or configured grant type 2. For example, the UE may determine a TB to be transmitted in each occasion indicated by a given configured grant.

For example, the BS may allocate SL resources to the UE in the same carrier or different carriers.

For example, an NR gNB may control LTE-based SL communication. For example, the NR gNB may transmit NR DCI to the UE to schedule LTE SL resources. In this case, for example, a new RNTI may be defined to scramble the NR DCI. For example, the UE may include an NR SL module and an LTE SL module.

For example, after the UE including the NR SL module and the LTE SL module receives NR SL DCI from the gNB, the NR SL module may convert the NR SL DCI into LTE DCI type 5A, and transmit LTE DCI type 5A to the LTE SL module every X ms. For example, after the LTE SL module receives LTE DCI format 5A from the NR SL module, the LTE SL module may activate and/or release a first LTE subframe after Z ms. For example, X may be dynamically indicated by a field of the DCI. For example, a minimum value of X may be different according to a UE capability. For example, the UE may report a single value according to its UE capability. For example, X may be positive.

Referring to FIG. 7(b), in LTE transmission mode 2, LTE transmission mode 4, or NR resource allocation mode 2, the UE may determine SL transmission resources from among SL resources preconfigured or configured by the BS/network. For example, the preconfigured or configured SL resources may be a resource pool. For example, the UE may autonomously select or schedule SL transmission resources. For example, the UE may select resources in a configured resource pool on its own and perform SL communication in the selected resources. For example, the UE may select resources within a selection window on its own by a sensing and resource (re)selection procedure. For example, the sensing may be performed on a subchannel basis. UE1, which has autonomously selected resources in a resource pool, may transmit SCI to UE2 on a PSCCH and then transmit data based on the SCI to UE2 on a PSSCH.

For example, a UE may help another UE with SL resource selection. For example, in NR resource allocation mode 2, the UE may be configured with a grant configured for SL transmission. For example, in NR resource allocation mode 2, the UE may schedule SL transmission for another UE. For example, in NR resource allocation mode 2, the UE may reserve SL resources for blind retransmission.

For example, in NR resource allocation mode 2, UE1 may indicate the priority of SL transmission to UE2 by SCI. For example, UE2 may decode the SCI and perform sensing and/or resource (re)selection based on the priority. For example, the resource (re)selection procedure may include identifying candidate resources in a resource selection window by UE2 and selecting resources for (re)transmission from among the identified candidate resources by UE2. For example, the resource selection window may be a time interval during which the UE selects resources for SL transmission. For example, after UE2 triggers resource (re)selection, the resource selection window may start at $T1 \geq 0$, and may be limited by the remaining packet delay budget of UE2. For example, when specific resources are indicated by the SCI received from UE1 by the second UE and an L1 SL reference signal received power (RSRP) measurement of the specific resources exceeds an SL RSRP threshold in the step of identifying candidate resources in the resource selection window by UE2, UE2 may not determine the specific resources as candidate resources. For example, the SL RSRP threshold may be determined based on the priority of SL transmission indicated by the SCI received from UE1 by UE2 and the priority of SL transmission in the resources selected by UE2.

For example, the L1 SL RSRP may be measured based on an SL demodulation reference signal (DMRS). For example, one or more PSSCH DMRS patterns may be configured or preconfigured in the time domain for each resource pool. For example, PDSCH DMRS configuration type 1 and/or type 2 may be identical or similar to a PSSCH DMRS pattern in the frequency domain. For example, an accurate DMRS pattern may be indicated by the SCI. For example, in NR resource allocation mode 2, the transmitting UE may select a specific DMRS pattern from among DMRS patterns configured or preconfigured for the resource pool.

For example, in NR resource allocation mode 2, the transmitting UE may perform initial transmission of a TB without reservation based on the sensing and resource (re)selection procedure. For example, the transmitting UE may reserve SL resources for initial transmission of a second TB using SCI associated with a first TB based on the sensing and resource (re)selection procedure.

For example, in NR resource allocation mode 2, the UE may reserve resources for feedback-based PSSCH retransmission through signaling related to a previous transmission of the same TB. For example, the maximum number of SL resources reserved for one transmission, including a current transmission, may be 2, 3 or 4. For example, the maximum number of SL resources may be the same regardless of whether HARQ feedback is enabled. For example, the maximum number of HARQ (re)transmissions for one TB may be limited by a configuration or preconfiguration. For example, the maximum number of HARQ (re)transmissions may be up to 32. For example, if there is no configuration or preconfiguration, the maximum number of HARQ (re)transmissions may not be specified. For example, the configuration or preconfiguration may be for the transmitting UE. For example, in NR resource allocation mode 2, HARQ feedback for releasing resources which are not used by the UE may be supported.

For example, in NR resource allocation mode 2, the UE may indicate one or more subchannels and/or slots used by the UE to another UE by SCI. For example, the UE may indicate one or more subchannels and/or slots reserved for PSSCH (re)transmission by the UE to another UE by SCI. For example, a minimum allocation unit of SL resources may be a slot. For example, the size of a subchannel may be configured or preconfigured for the UE.

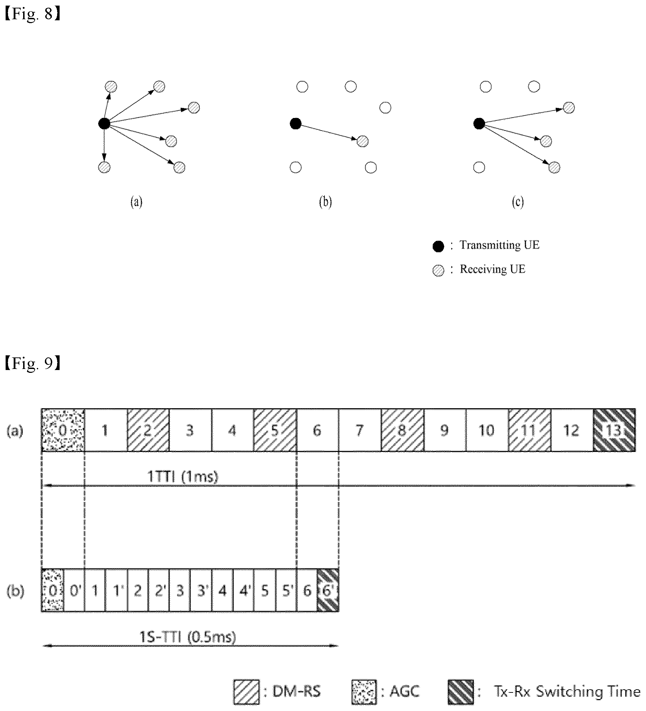

FIG. 8 illustrates three cast types according to an embodiment of the present disclosure.

Specifically, FIG. 8(a) illustrates broadcast-type SL communication, FIG. 8(b) illustrates unicast-type SL communication, and FIG. 8(c) illustrates groupcast-type SL communication. In unicast-type SL communication, a UE may perform one-to-one communication with another UE. In groupcast-type SL communication, the UE may perform SL communication with one or more UEs of a group to which the UE belongs. In various embodiments of the present disclosure, SL groupcast communication may be replaced with SL multicast communication, SL one-to-many communication, and so on.

FIG. 9 is a diagram illustrating comparison between a long transmission time interval (L-TTI) and a short transmission time interval (S-TTI).

Referring to FIG. 9(a), in the case of OFDM symbols using a normal cyclic prefix (CP), 14 symbols may be used for an L-TTI (1 ms), where symbol numbers may be assigned sequentially from 0 to 13. The duration of a single symbol is 70 $\mu$s (microseconds) for symbol #0, while the remaining symbols are approximately 66.6 $\mu$s each. In this case, a region within a subframe available for sidelink data transmission includes a total of 8 symbols: symbols #1, 3, 4, 6, 7, 9, 10, and 12.

Symbol #0 and symbol #13 may be used sequentially for automatic gain control (AGC) and Tx/Rx switching. However, the actual time used for AGC may only be about 30 $\mu$s of the 70 $\mu$s allocated for symbol #0. Similarly, the time for Tx/Rx switching may also be about 30 $\mu$s.

If one S-TTI is configured to be 0.5 ms (i.e., one slot), which is half of 1 ms and the one S-TTI includes 14 symbols within the 0.5 ms, the one S-TTI (one slot) may be configured as shown in FIG. 9(b). In this case, the 14 symbols within the one S-TTI may also be indexed as illustrated in FIG. 9(b).

In future systems, the UE may perform sidelink transmission and reception operations in unlicensed bands (e.g., shared spectrum). For operations in unlicensed bands, channel sensing (e.g., energy detection/measurement) needs to be performed before the UE performs transmission according to regulations or requirements per band. If the channel sensing results determine that a channel or RB set to be used is idle, the UE is allowed to transmit in the unlicensed band. On the other hand, if the channel sensing results determine that the channel or RB set to be used is busy, the UE may cancel some or all of the transmission in the unlicensed band.

Here, the RB set may refer to an RB set described in Table 4, and the channel may refer to a channel described in Table 5. In addition, the RB set or channel typically refers to a frequency domain unit where a channel sensing operation is performed, usually with a bandwidth of approximately 20 MHz. Furthermore, the case where the channel sensing results are determined to be idle means that the energy measured in the corresponding RB set or channel is below or falls under a specific threshold.

In addition, the case where the channel sensing results are determined to be busy means that the energy measured in the corresponding RB set or channel is above or exceeds the specific threshold.

In the operations in unlicensed bands, the channel sensing operation may be skipped or simplified for a specific time period after transmission by the UE. Here, simplifying the channel sensing operation means that the channel sensing duration may be relatively shorter. However, after a certain amount of time has passed after the transmission, the UE may determine whether to transmit by performing the channel sensing operation as usual. In transmission in unlicensed bands, the time duration, frequency occupancy, and/or power spectral density (PSD) of a signal/channel transmitted by the UE need to be above predetermined thresholds, depending on regulations or requirements. To simplify channel sensing in unlicensed bands, the BS or UE may announce the occupation of a channel for a specific duration, which is secured through an initial general channel sensing operation, by providing channel occupancy time (COT) duration information. The maximum value of the COT duration may be configured differently based on the priority of a service or data packet.

Table 4 below is extracted from 3GPP TS 38.214, and Table 5 is extracted from 3GPP TS 37.213.

[Table 4]

---

**7 UE procedures for transmitting and receiving on a carrier with intra-cell guard bands**

For operation with shared spectrum channel access for FR1, when the UE is configured with any of *IntraCell-GuardBandsPerSCS* for UL carrier and for DL carrier with SCS configuration $\mu$, the UE is provided with $N_{\text{RB-set,x}}$ - 1 intra-cell guard bands on a carrier with $\mu$, each defined by start CRB and size in number of CRBs, $GB_{s,x}^{\text{start},\mu}$ and $GB_{s,x}^{\text{size},\mu}$, provided by higher layer parameters *startCRB* and *nrofCRBs,* respectively, where s $\in$ {0,1, ..., $N_{\text{RB-set,x}}$ - 2}. The subscript x is set to DL and UL for the downlink and uplink, respectively.

Where there is no risk of confusion, the subscript x may be dropped. The intra-cell guard bands separate $N_{\text{RB-set,x}}$ RB sets, each defined by start and end CRB, $RB_{s,x}^{\text{start},\mu}$ and $RB_{s,x}^{\text{end},\mu}$, respectively. The UE does not expect that *nrofCRBs* is configured with non-zero value smaller than the applicable intra-cell guard bands as specified in [8, TS 38.101-1] corresponding to $\mu$ and carrier size $N_{\text{grid,x}}^{\text{size},\mu}$. The UE determines the start and end CRB indices for s E {0,1, ... , $N_{\text{RB-set,x}}$ - 1} as

$$RB_{s,x}^{\text{start},\mu} = N_{\text{grid,x}}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

and

$$RB_{s,x}^{\text{end},\mu} = N_{\text{grid,x}}^{\text{start},\mu} + \begin{cases} N_{\text{grid,x}}^{\text{size},\mu} - 1 & s = N_{\text{RB-set,x}} - 1 \\ GB_{s,x}^{\text{start},\mu} - 1 & \text{otherwise} \end{cases}$$

---

**7 UE procedures for transmitting and receiving on a carrier with intra-cell guard bands**

The RB set with index s consists of $RB_{s,x}^{\text{size},\mu}$ resource blocks where $RB_{s,x}^{\text{size},\mu} = RB_{s,x}^{\text{end},\mu} - RB_{s,x}^{\text{start},\mu} + 1$. When the UE is not configured with *IntraCellGuardBandsPerSCS* for $\mu$, the UE determines the CRB indices for the intra-cell guard band(s), if any, and corresponding RB set(s) according to the nominal intra-cell guard band and RB set pattern as specified in [8, TS 38.101-1] corresponding to $\mu$ and carrier size $N_{\text{grid},x}^{\text{size},\mu}$. For either or both DL and UL, if the nominal intra-cell guard band and RB set pattern as specified in [8, TS 38.101-1] contains no intra-cell guard bands, the number of RB sets for the carrier is $N_{\text{RB-set},x}$ = 1.

For a carrier with $\mu$, the UE expects $N_{\text{BWP},i}^{\text{start},\mu} = RB_{s0,x}^{\text{start},\mu}$ and $N_{\text{BWP},i}^{\text{size},\mu} = RB_{s1,x}^{\text{end},\mu} - RB_{s0,x}^{\text{start},\mu} + 1$ where $0 \leq s0 \leq s1 \leq N_{\text{RB-set},x}$ - 1 for a BWP i configured by *initialDownlinkBWP* or *BWP-Downlink* for the DL BWP, or *initialUplinkBWP* or *BWP-Uplink* for the UL BWP. Within the BWP *i*, RB sets are numbered in increasing order from 0 to $N_{\text{RB-set},x}^{\text{BWP}} - 1$ where $N_{\text{RB-set},x}^{\text{BWP}}$ is the number of RB sets contained in the BWP i and RB set 0 within the BWP *i* corresponds to RB set s0 in the carrier and RB set $N_{\text{RB-set},x}^{\text{BWP}} - 1$ within the BWP *i* corresponds to RB set s1 in the carrier.

When a UE is provided with *nrofCRBs* = 0 for all intra-cell guard band(s) on a carrier with $\mu$, the UE is indicated that no intra-cell guard-bands are configured for the carrier and expects $N_{RB\text{-}set,x}$ > 1. For $\mu$ = 0, the UE expects the number of RBs within a RB set is between 100 and 110. For $\mu$ = 1, the UE expects the number of RBs within a RB set is between 50 and 55 except for at most one RB set which may contain 56 RBs.

[Table 5]

**4.0 General**

Unless otherwise noted, the definitions below are applicable for the following terminologies used in this specification:

- A channel refers to a carrier or a part of a carrier consisting of a contiguous set of resource blocks (RBs) on which a channel access procedure is performed in shared spectrum.

- A channel access procedure is a procedure based on sensing that evaluates the availability of a channel for performing transmissions. The basic unit for sensing is a sensing slot with a duration $T_{sl}$ = 9us. The sensing slot duration $T_{sl}$ is considered to be idle if an eNB/gNB or a UE senses the channel during the sensing slot duration, and determines that the detected power for at least 4us within the sensing slot duration is less than energy detection threshold $X_{\text{Thresh}}$. Otherwise, the sensing slot duration $T_{sl}$ is considered to be busy.

- A *channel occupancy* refers to transmission(s) on channel(s) by eNB/gNB/UE(s) after performing the corresponding channel access procedures in this clause.

- A *Channel Occupancy Time* refers to the total time for which eNB/gNB/UE and any eNB/gNB/UE(s) sharing the channel occupancy perform transmission(s) on a channel after an eNB/gNB/UE performs the corresponding channel access procedures described in this clause. For determining a *Channel Occupancy Time,* if a transmission gap is less than or equal to 25*us*, the gap duration is counted in the channel occupancy time. A channel occupancy time may be shared for transmission between an eNB/gNB and the corresponding UE(s).

- A *DL transmission burst* is defined as a set of transmissions from an eNB/gNB without any gaps greater than 16us. Transmissions from an eNB/gNB separated by a gap of more than 16us are considered as separate DL transmission bursts. An eNB/gNB may transmit transmission(s) after a gap within a *DL transmission burst* without sensing the corresponding channel(s) for availability.

- A *UL transmission burst* is defined as a set of transmissions from a UE without any gaps greater than 16us. Transmissions from a UE separated by a gap of more than 16 us are considered as separate UL transmission bursts. A UE may transmit transmission(s) after a gap within a *UL transmission burst* without sensing the corresponding channel(s) for availability.

- A *discovery burst* refers to a DL transmission burst including a set of signal(s) and/or channel(s) confined within a window and associated with a duty cycle. The *discovery burst* may be any of the following:

- Transmission(s) initiated by an eNB that includes a primary synchronization signal (PSS), secondary synchronization signal (SSS) and cell-specific reference signal(s)(CRS) and may include non-zero power CSI reference signals (CSI-RS).

(continued)

<table>
<tr><td>

**4.0 General**

    - Transmission(s) initiated by a gNB that includes at least an SS/PBCH block consisting of a primary synchronization signal (PSS), secondary synchronization signal (SSS), physical broadcast channel (PBCH) with associated demodulation reference signal (DM-RS) and may also include CORESET for PDCCH scheduling PDSCH with SIB1, and PDSCH carrying SIB1 and/or non-zero power CSI reference signals (CSI-RS).

</td></tr>
</table>

The BS may share a COT duration that the BS secures through channel sensing by transmitting the COT duration in the form of DCI. Based on the DCI received from the BS, the UE may perform a specific (indicated) type of channel sensing and/or a CP extension (CPE) within the COT duration. Additionally, the UE may share a COT duration that the UE secures through channel sensing with the BS, which is the recipient of UL transmission from the UE. Information on the COT duration acquired by the UE may be provided to the BS via configured grant - uplink control information (CG-UCI). In this case, the BS may perform simplified channel sensing within the COT duration shared by the UE.

In the case of sidelink communication, in a Mode 1 resource allocation (RA) operation, the UE may receive an indication about resources to be used for sidelink transmission from the BS via DCI or RRC signaling. In a Mode 2 RA operation, the UE may independently determine resources to be used for sidelink transmission and reception through sensing operations between UEs, without assistance from the BS, and then perform sidelink transmission and reception.

In the case of channel access type 1, which may be used regardless of a COT configuration, DL transmission may be performed through a procedure shown in Table 6, and UL transmission may be performed through a procedure shown in Table 7.

Table 6 and Table 7 are extracted from 3GPP TS 37.213.

[Table 6]

<table>
<tr><td>

The eNB/gNB may transmit a transmission after first sensing the channel to be idle during the sensing slot durations of a defer duration $T_d$ and after the counter $N$ is zero in step 4. The counter $N$ is adjusted by sensing the channel for additional sensing slot duration(s) according to the steps below:

    1) *set N = $N_{init}$*, where $N_{init}$ is a random number uniformly distributed between 0 and $CW_p$, and go to step 4;

    2) if $N > 0$ and the eNB/gNB chooses to decrement the counter, *set N = N - 1*;

    3) sense the channel for an additional sensing slot duration, and if the additional sensing slot duration is idle, go to step 4; else, go to step 5;

    4) if $N = 0$, stop; else, go to step 2.

    5) sense the channel until either a busy sensing slot is detected within an additional defer duration $T_d$ or all the sensing slots of the additional defer duration $T_d$ are detected to be idle;

    6) if the channel is sensed to be idle during all the sensing slot durations of the additional defer duration $T_d$, go to step 4; else, go to step 5;

If an eNB/gNB has not transmitted a transmission after step 4 in the procedure above, the eNB/gNB may transmit a transmission on the channel, if the channel is sensed to be idle at least in a sensing slot duration $T_{sl}$ when the eNB/gNB is ready to transmit and if the channel has been sensed to be idle during all the sensing slot durations of a defer duration $T_d$ immediately before this transmission. If the channel has not been sensed to be idle in a sensing slot duration $T_{sl}$ when the eNB/gNB first senses the channel after it is ready to transmit or if the channel has been sensed to be not idle during any of the sensing slot durations of a defer duration $T_d$ immediately before this intended transmission, the eNB/gNB proceeds to step 1 after sensing the channel to be idle during the sensing slot durations of a defer duration $T_d$.

The defer duration $T_d$ consists of duration $T_f$ = 16us immediately followed by $m_p$ consecutive sensing slot durations $T_{sl}$, and $T_f$ includes an idle sensing slot duration $T_{sl}$ at start of $T_f$.

If a gNB transmits transmissions including PDSCH that are associated with channel access priority class p on a channel, the gNB maintains the contention window value $CW_p$ and adjusts $CW_p$ before step 1 of the procedure described in clause 4.1.1 for those transmissions using the following steps:

    1) For every priority class p $\in$ {1,2,3,4}, set $CW_p = CW_{min,p}$.

    2) If HARQ-ACK feedback is available after the last update of $W_p$, go to step 3. Otherwise, if the gNB transmission after procedure described in clause 4.1.1 does not include a retransmission or is transmitted within a duration $T_W$ from the end of the *reference duration* corresponding to the earliest DL channel occupancy after the last update of $CW_p$, go to step 5; otherwise go to step 4.

</td></tr>
</table>

(continued)

3) The HARQ-ACK feedback(s) corresponding to PDSCH(s) in the reference duration for the latest DL channel occupancy for which HARQ-ACK feedback is available is used as follows:

a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4.

4) Increase $CW_p$ for every priority class $p \in \{1,2,3,4\}$ to the next higher allowed value.

5) For every priority class $p \in \{1,2,3,4\}$, maintain $CW_p$ as it is; go to step 2.

The *reference duration* and duration $T_w$ in the procedure above are defined as follows:

- The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment.

- $T_W = \max(T_A, T_B + 1ms)$ where $T_B$ is the duration of the transmission burst from start of the *reference duration* in ms and $T_A = 5ms$ if the absence of any other technology sharing the channel may not be guaranteed on a long-term basis (e.g. by level of regulation), and $T_A = 10ms$ otherwise.

If a gNB transmits transmissions using Type 1 channel access procedures associated with the channel access priority class p on a channel and the transmissions are not associated with explicit HARQ-ACK feedbacks by the corresponding UE(s), the gNB adjusts $CW_p$ before step 1 in the procedures described in subclase 4.1.1, using the latest $CW_p$ used for any DL transmissions on the channel using Type 1 channel access procedures associated with the channel access priority class $p$. If the corresponding channel access priority class $p$ has not been used for any DL transmissions on the channel, $CW_p = CW_{min,p}$ is used.

[Table 7]

A UE may transmit the transmission using Type 1 channel access procedure after first sensing the channel to be idle during the slot durations of a defer duration $T_d$, and after the counter $N$ is zero in step 4. The counter $N$ is adjusted by sensing the channel for additional slot duration(s) according to the steps described below.

1) set $N = N_{init}$, where $N_{init}$ is a random number uniformly distributed between 0 and $CW_p$, and go to step 4;

2) if $N > 0$ and the UE chooses to decrement the counter, set $N = N - 1$;

3) sense the channel for an additional slot duration, and if the additional slot duration is idle, go to step 4; else, go to step 5;

4) if $N = 0$, stop; else, go to step 2.

5) sense the channel until either a busy slot is detected within an additional defer duration $T_d$ or all the slots of the additional defer duration $T_d$ are detected to be idle;

6) if the channel is sensed to be idle during all the slot durations of the additional defer duration $T_d$, go to step 4; else, go to step 5;

If a UE has not transmitted a UL transmission on a channel on which UL transmission(s) are performed after step 4 in the procedure above, the UE may transmit a transmission on the channel, if the channel is sensed to be idle at least in a sensing slot duration $T_{sl}$ when the UE is ready to transmit the transmission and if the channel has been sensed to be idle during all the slot durations of a defer duration $T_d$ immediately before the transmission. If the channel has not been sensed to be idle in a sensing slot duration $T_{sl}$ when the UE first senses the channel after it is ready to transmit, or if the channel has not been sensed to be idle during any of the sensing slot durations of a defer duration $T_d$ immediately before the intended transmission, the UE proceeds to step 1 after sensing the channel to be idle during the slot durations of a defer duration $T_d$.

The defer duration $T_d$ consists of duration $T_f = 16us$ immediately followed by $m_p$ consecutive slot durations where each slot duration is $T_{sl} = 9us$, and $T_f$ includes an idle slot duration $T_{sl}$ at start of $T_f$.

If a UE transmits transmissions using Type 1 channel access procedures that are associated with channel access priority class p on a channel, the UE maintains the contention window value $CW_p$ and adjusts $CW_p$ for those transmissions before step 1 of the procedure described in clause 4.2.1.1, using the following steps:

1) For every priority class $p \in \{1,2,3,4\}$, set $CW_p = CW_{min,p}$;

(continued)

2) If HARQ-ACK feedback is available after the last update of $CW_p$, go to step 3. Otherwise, if the UE transmission after procedure described in clause 4.2.1.1 does not include a retransmission or is transmitted within a duration $T_W$ from the end of the *reference duration* corresponding to the earliest UL channel occupancy after the last update of $CW_p$, go to step 5; otherwise go to step 4.

3) The HARQ-ACK feedback(s) corresponding to PUSCH(s) in the *reference duration* for the latest UL channel occupancy for which HARQ-ACK feedback is available is used as follows:

    a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4.

4) Increase $CW_p$ for every priority class $p \in \{1,2,3,4\}$ to the next higher allowed value;

5) For every priority class $p \in \{1,2,3,4\}$, maintain $CW_p$ as it is; go to step 2.

The HARQ-ACK feedback, *reference duration* and duration $T_W$ in the procedure above are defined as the following:

- For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows:

    - If a new transmission is indicated, 'ACK' is assumed for the transport blocks or code block groups in the corresponding PUSCH(s) for the TB-based and CBG-based transmission, respectively.

    - If a retransmission is indicated for TB-based transmissions, 'NACK' is assumed for the transport blocks in the corresponding PUSCH(s).

    - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively.

    - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment.

    - $T_w = \max(T_A, T_B + 1ms)$ where $T_B$ is the duration of the transmission burst from start of the *reference duration* in ms and $T_A = 5ms$ if the absence of any other technology sharing the channel cannot be guaranteed on a long-term basis (e.g. by level of regulation), and $T_A = 10ms$ otherwise.

Meanwhile, within the COT, a simplified channel access type, channel access type 2 may be used before transmission. DL transmission may be performed through a procedure shown in Table 8, and UL transmission may be performed through a procedure shown in Table 9.

Table 8 and Table 9 are extracted from 3GPP TS 37.213.

[Table 8]

4.1.2 Type 2 DL channel access procedures

This clause describes channel access procedures to be performed by an eNB/gNB where the time duration spanned by sensing slots that are sensed to be idle before a downlink transmission(s) is deterministic.

If an eNB performs Type 2 DL channel access procedures, it follows the procedures described in clause 4.1.2.1.

Type 2A channel access procedures as described in clause 4.1.2.1 are only applicable to the following transmission(s) performed by an eNB/gNB:

    - Transmission(s) initiated by an eNB including discovery burst and not including PDSCH where the transmission(s) duration is at most 1*ms*, or

    - Transmission(s) initiated by a gNB with only discovery burst or with discovery burst multiplexed with non-unicast information, where the transmission(s) duration is at most 1*ms*, and the discovery burst duty cycle is at most 1/20, or

(continued)

| |
|---|
| 4.1.2 Type 2 DL channel access procedures |
| - Transmission(s) by an eNB/ gNB following transmission(s) by a UE after a gap of 25us in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. |
| 4.1.2.1 Type 2A DL channel access procedures |
| An eNB/gNB may transmit a DL transmission immediately after sensing the channel to be idle for at least a sensing interval $T_{short\_dl}$ = 25us. $T_{short\_dl}$ consists of a duration $T_f$ = 16us immediately followed by one sensing slot and $T_f$ includes a sensing slot at start of $T_f$. The channel is considered to be idle for $T_{short\_dl}$ if both sensing slots of $T_{short\_dl}$ are sensed to be idle. |
| 4.1.2.2 Type 2B DL channel access procedures |
| A gNB may transmit a DL transmission immediately after sensing the channel to be idle within a duration of $T_f$ = 16us. $T_f$ includes a sensing slot that occurs within the last 9us of $T_f$. The channel is considered to be idle within the duration $T_f$ if the channel is sensed to be idle for a total of at least 5us with at least 4us of sensing occurring in the sensing slot. |
| 4.1.2.3 Type 2C DL channel access procedures When a gNB follows the procedures in this clause for transmission of a DL transmission, the gNB does not sense the channel before transmission of the DL transmission. The duration of the corresponding DL transmission is at most 584us. |

[Table 9]

| |
|---|
| 4.2.1.2 Type 2 UL channel access procedure |
| This clause describes channel access procedures by UE where the time duration spanned by the sensing slots that are sensed to be idle before a UL transmission(s) is deterministic. |
| If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval $T_{short\_ul}$ = 25us. $T_{short\_ul}$ consists of a duration $T_f$ = 16us immediately followed by one sensing slot and $T_f$ includes a sensing slot at start of $T_f$. The channel is considered to be idle for $T_{short\_ul}$ if both sensing slots of $T_{short\_ul}$ are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of $T_f$ = 16us. $T_f$ includes a sensing slot that occurs within the last 9us of $T_f$. The channel is considered to be idle within the duration $T_f$ if the channel is sensed to be idle for total of at least 5us with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584us. |

In embodiments of the present disclosure, TYPE 2A SL channel access may use a sensing duration of T_short_sl = 25 μs, similar to TYPE 2A DL and/or UL channel access. This sensing duration may consist of a duration of T_f = 16 μs and one sensing slot, which is immediately followed, where T_f may include the sensing slot at the beginning. The basic IDLE determination may also borrow from that for DL or UL. For example, the IDLE determination may be made by determining whether the energy detected during the sensing duration is below (or less than) a specific threshold, similarly to TYPE 1 channel access.

In embodiments of the present disclosure, TYPE 2B SL channel access may use a sensing duration of T_short_sl = 25 μs, similar to TYPE 2B DL and/or UL channel access. This sensing duration may consist of a duration of T_f = 16 μs and one sensing slot, which is immediately followed, where T_f may include the sensing slot at the beginning. The basic IDLE determination may also borrow from that for DL or UL. For example, the IDLE determination may be made by determining whether the energy detected during the sensing duration is below (or less than) a specific threshold, similarly to TYPE 1 channel access.

In embodiments of the present disclosure, TYPE 2C SL channel access may not perform channel sensing in the same way as TYPE 2C DL and/or UL channel access. Instead, the time duration for SL transmission may be up to 584 μs.

Additionally, in NR sidelink communication, a resource pool is configured. Each UE may transmit and receive sidelink data in the resource pool. The configuration of the resource pool may be achieved through RRC parameters as shown in Table 10.

Table 10 is extracted from 3GPP TS 38.331.

[Table 10]

```
—                        SL-ResourcePool
```
The IE *SL-ResourcePool* specifies the configuration information for NR sidelink communication resource pool.

**SL-ResourcePool information element**

```
-- ASN1START
-- TAG-SL-RESOURCEPOOL-START

SL-ResourcePool-r16 ::=              SEQUENCE {
    sl-PSCCH-Config-r16                 SetupRelease { SL-PSCCH-Config-r16 }
OPTIONAL,    -- Need M
    sl-PSSCH-Config-r16                 SetupRelease { SL-PSSCH-Config-r16 }
OPTIONAL,    -- Need M
    sl-PSFCH-Config-r16                 SetupRelease { SL-PSFCH-Config-r16 }
OPTIONAL,    -- Need M
    sl-SyncAllowed-r16                  SL-SyncAllowed-r16
OPTIONAL,    -- Need M
    sl-SubchannelSize-r16              ENUMERATED {n10, n12, n15, n20, n25, n50, n75, n100}
OPTIONAL,    -- Need M
    dummy                              INTEGER (10..160)
OPTIONAL,    -- Need M
    sl-StartRB-Subchannel-r16          INTEGER (0..265)
OPTIONAL,    -- Need M
    sl-NumSubchannel-r16               INTEGER (1..27)
OPTIONAL,    -- Need M
    sl-Additional-MCS-Table-r16        ENUMERATED {qam256, qam64LowSE, qam256-qam64LowSE }
OPTIONAL,    -- Need M
    sl-ThreshS-RSSI-CBR-r16            INTEGER (0..45)
OPTIONAL,    -- Need M
    sl-TimeWindowSizeCBR-r16           ENUMERATED {ms100, slot100}
OPTIONAL,    -- Need M
    sl-TimeWindowSizeCR-r16            ENUMERATED {ms1000, slot1000}
OPTIONAL,    -- Need M
    sl-PTRS-Config-r16                 SL-PTRS-Config-r16
OPTIONAL,     -- Need M
    sl-UE-SelectedConfigRP-r16         SL-UE-SelectedConfigRP-r16
OPTIONAL,    -- Need M
    sl-RxParametersNcell-r16           SEQUENCE {
        sl-TDD-Configuration-r16          TDD-UL-DL-ConfigCommon
OPTIONAL,    -- Need M
        sl-SyncConfigIndex-r16            INTEGER (0..15)
    }
OPTIONAL,    -- Need M
    sl-ZoneConfigMCR-List-r16          SEQUENCE (SIZE (16)) OF SL-ZoneConfigMCR-r16
OPTIONAL,    -- Need M
    sl-FilterCoefficient-r16           FilterCoefficient
OPTIONAL,    -- Need M
    sl-RB-Number-r16                   INTEGER (10..275)
OPTIONAL,    -- Need M
    sl-PreemptionEnable-r16            ENUMERATED {enabled, pl1, pl2, pl3, pl4, pl5, pl6, pl7,
pl8}           OPTIONAL,    -- Need R
    sl-PriorityThreshold-UL-URLLC-r16  INTEGER (1..9)
OPTIONAL,    -- Need M
    sl-PriorityThreshold-r16           INTEGER (1..9)
OPTIONAL,    -- Need M
    sl-X-Overhead-r16                  ENUMERATED {n0,n3, n6, n9}
```

```
OPTIONAL,    -- Need S
    sl-PowerControl-r16                    SL-PowerControl-r16
OPTIONAL,    -- Need M
    sl-TxPercentageList-r16                SL-TxPercentageList-r16
OPTIONAL,    -- Need M
    sl-MinMaxMCS-List-r16                  SL-MinMaxMCS-List-r16
OPTIONAL,    -- Need M
    ...,
    [[
    sl-TimeResource-r16                    BIT STRING (SIZE (10..160))
OPTIONAL    -- Need M
    ]],
    [[
    sl-PBPS-CPS-Config-r17                 SetupRelease { SL-PBPS-CPS-Config-r17 }
OPTIONAL,    -- Need M
    sl-InterUE-CoordinationConfig-r17  SetupRelease { SL-InterUE-CoordinationConfig-r17 }
OPTIONAL    -- Need M
    ]]
}
```

| **SL-ResourcePool** field descriptions |
|---|
| **dummy** |
| This field is not used in the specification. If received it shall be ignored by the UE. |
| **sl-Additional-MCS-Table** |
| Indicates the MCS table(s) additionally used in the resource pool. 64QAM table is (pre-)configured as default. Zero, one or two may be additionally (pre-)configured using the 256QAM and/or low-SE MCS tables. If two MCS tables are indicated, 256QAM MCS table is the 1st table and qam64lowSE MCS table is the 2nd table as specified in TS 38.214 [19], clause 8.1.3.1. |
| **sl-FilterCoefficient** |
| This field indicates the filtering coefficient for long-term measurement and reference signal power derivation used for sidelink open-loop power control. |
| **sl-InterUE-CoordinationConfig** |
| Indicates the configured sidelink inter-UE coordination parameters. |
| **sl-NumSubchannel** |
| Indicates the number of subchannels in the corresponding resource pool, which consists of contiguous PRBs only. |
| **sl-PBPS-CPS-Config** |
| Indicates configuration information for the operation of full sensing only, partial sensing only, random resource selection only, or any combination(s) configured. |
| **sl-PreemptionEnable** |
| Indicates whether pre-emption is disabled or enabled in a resource pool. If the field is present and the value is *pl1*, *pl2*, and so on (but not *enabled*), it means that pre-emption is enabled and a priority level p_preemption is configured. If the field is present and the value is *enabled*, the pre-emption is enabled (but p_preemption is not configured) and pre-emption is applicable to all levels. |
| **sl-PriorityThreshold-UL-URLLC** |
| Indicates the threshold used to determine whether NR sidelink transmission is prioritized over uplink transmission of priority index 1 as specified in TS 38.213[13], clause 16.2.4.3, or whether PUCCH transmission carrying SL HARQ is prioritized over PUCCH transmission carrying UCI of priority index 1 if they overlap in time as specified in TS 38.213 [13], clause 9.2.5.0. |
| **sl-PriorityThreshold** |
| Indicates the threshold used to determine whether NR sidelink transmission is prioritized over uplink transmission of priority index 0 as specified in TS 38.213[13], clause 16.2.4.3, or whether PUCCH transmission carrying SL HARQ is prioritized over PUCCH transmission carrying UCI of priority index 0 if they overlap in time as specified in TS 38.213 [13], clause 9.2.5.0. |
| **sl-RB-Number** |
| Indicates the number of PRBs in the corresponding resource pool, which consists of contiguous PRBs only. The remaining RB cannot be used (See TS 38.214[19], clause 8). |
| **sl-StartRB-Subchannel** |
| Indicates the lowest RB index of the subchannel with the lowest index in the resource pool with respect to the lowest RB index of a SL BWP. |
| **sl-SubchannelSize** |
| Indicates the minimum granularity in frequency domain for the sensing for PSSCH resource selection in the unit of PRB. |
| **sl-SyncAllowed** |
| Indicates the allowed synchronization reference(s) which is (are) allowed to use the configured resource pool. |
| **sl-SyncConfigIndex** |

| |
|---|
| Indicates the synchronisation configuration that is associated with a reception pool, by means of an index to the corresponding entry *SL-SyncConfigList* of in *SIB12* for NR sidelink communication. |
| ***sl-TDD-Configuration*** <br> Indicates the TDD configuration associated with the reception pool of the cell indicated by *sl-SyncConfigIndex*. |
| ***sl-ThreshS-RSSI-CBR*** <br> Indicates the S-RSSI threshold for determining the contribution of a sub-channel to the CBR measurement. Value 0 corresponds to -112 dBm, value 1 to -110 dBm, value n to (-112 + n*2) dBm, and so on. |
| ***sl-TimeResource*** <br> Indicates the bitmap of the resource pool, which is defined by repeating the bitmap with a periodicity during a SFN or DFN cycle. |
| ***sl-TimeWindowSizeCBR*** <br> Indicates the time window size for CBR measurement. |
| ***sl-TimeWindowSizeCR*** <br> Indicates the time window size for CR evaluation. |
| ***sl-TxPercentageList*** <br> Indicates the portion of candidate single-slot PSSCH resources over the total resources. Value p20 corresponds to 20%, and so on. |
| ***sl-X-Overhead*** <br> Accounts for overhead from CSI-RS, PT-RS. If the field is absent, the UE applies value *n0* (see TS 38.214 [19], clause 5.1.3.2). |

The present disclosure proposes a method for configuring and setting up a resource pool and/or subchannel for sidelink communication in consideration of an RB set, which is the basic frequency unit for performing the channel access procedure in unlicensed bands. Additionally, the present disclosure aims to propose UE operations when the channel access procedure succeeds only in some RB sets in a sidelink resource region composed of multiple RB sets.

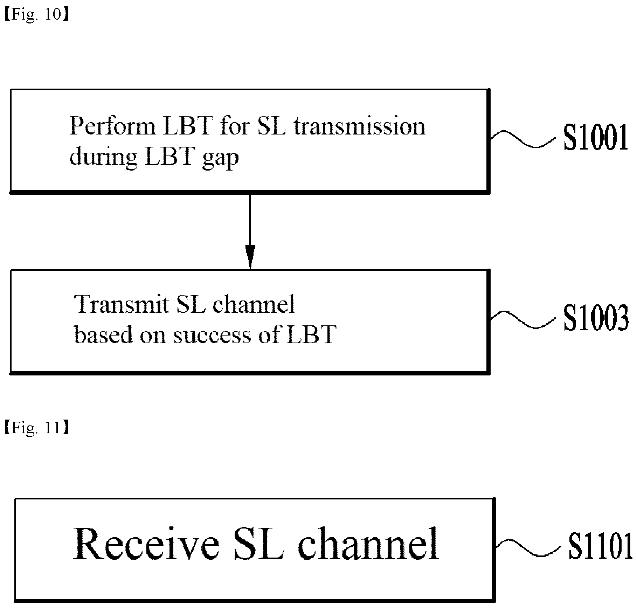

FIGS. 10 to 12 are diagrams for explaining an overall operational process between sidelink UEs according to embodiments of the present disclosure.

The overall operation process of a transmitting UE will be described with reference to FIG. 10.

The transmitting UE may perform LBT during an LBT gap to prepare for sidelink transmission (S1001). For example, the LBT gap may be configured according to at least one of [Method #1] or [Method #3]. Additionally, the transmitting UE may perform Type 1 LBT (i.e., Type 1 channel access described above) or Type 2 A/B/C LBT (i.e., Type 2 A/B/C channel access described above) during the LBT gap.

Based on successfully completing the LBT, the transmitting UE may transmit a sidelink channel (S1003). For example, the sidelink channel may be transmitted based on [Method #2].

The overall operation process of a receiving UE will be explained with reference to FIG. 11.

The receiving UE may receive the sidelink channel transmitted by the transmitting UE (S1101).

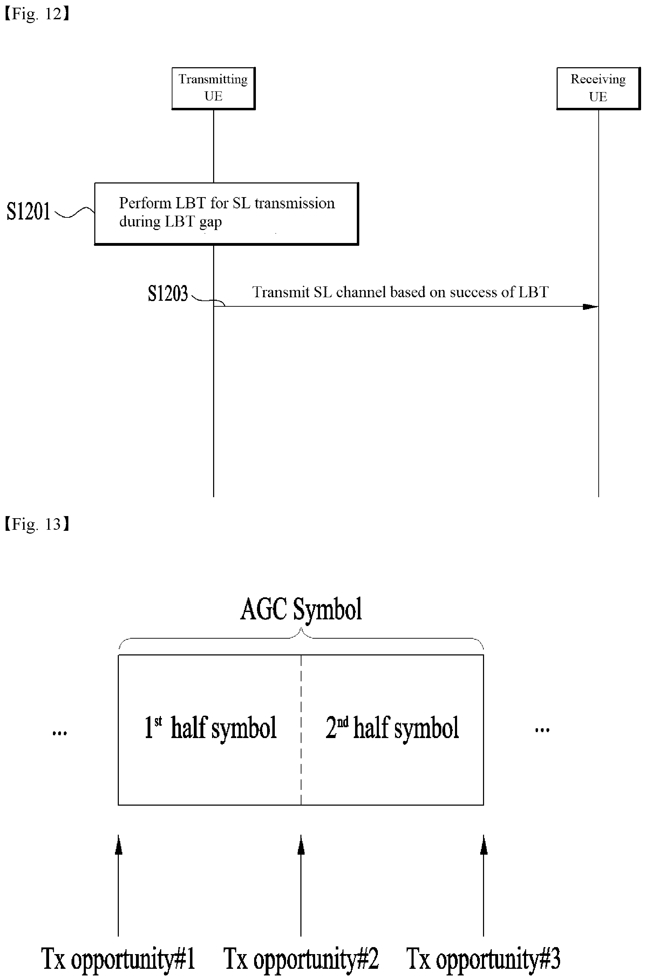

The overall operation process of the transmitting UE and receiving UE will be explained with reference to FIG. 12.

The transmitting UE may perform LBT for sidelink transmission during the LBT gap (S1201). For example, the LBT gap may be configured according to at least one of [Method #1] or [Method #3]. Additionally, the transmitting UE may perform Type 1 LBT (i.e., Type 1 channel access described above) or Type 2 A/B/C LBT (i.e., Type 2 A/B/C channel access described above) during the LBT gap.

Based on successfully completing the LBT, the transmitting UE may transmit the sidelink channel (S1203). For example, the sidelink channel may be transmitted to the receiving UE based on [Method #2].

[Method #1] Method of creating gap for performing Type 1 CAP (e.g., Type 1 LBT).

In SL, the position of the transmitting UE is not fixed unlike UL/DL communication between the BS and UE. Therefore, in the configuration of SL resources within a slot, a symbol preceding a PSCCH/PSSCH/PSFCH (physical sidelink feedback channel) is used for AGC. Additionally, after transmission and reception of the PSCCH/PSSCH/PSFCH within a slot, a TX-RX switching period symbol for transitioning between transmission and reception may be configured. In other words, an AGC symbol is positioned before symbols allocated for an SL channel, and a TX-RX switching period is configured after the symbols allocated for the SL channel. Furthermore, the SL resource configuration within the slot is repeated for each slot.

In unlicensed bands, the implementation of a channel access mechanism such as LBT may be required before all transmissions to ensure spectrum sharing. For example, when Type 1 LBT based on random back-off is performed, if the LBT procedure is not completed before a transmission start symbol, LBT is considered to be failed, and scheduled/allocated transmission may be dropped. Therefore, when Type 1 LBT is performed for SL communication in unlicensed bands (e.g., PSCCH/PSSCH/PSFCH transmission), an LBT gap may be created by considering the time required to complete the LBT procedure before the transmission start time.

As described above, SL resources in a slot may have an AGC symbol for a potential AGC settling time at the beginning. After the AGC symbol, symbols for a PSCCH/PSSCH/PSFCH may be placed, and a TX-RX switching period may be configured after the symbols for the PSCCH/PSSCH/PSFCH. The symbol configuration described above may be repeated on a slot basis. Thus, symbols located before the actual PSCCH/PSSCH/PSFCH transmission start time in a slot or symbols for TX-RX switching located in a slot immediately before the actual PSCCH/PSSCH/PSFCH transmission start time may be use as a time gap for the LBT procedure (i.e., LBT gap). For example, by extending the TX-RX switching period located in a slot immediately before the actual PSCCH/PSSCH/PSFCH transmission start time to a symbol before the PSCCH/PSSCH/PSFCH transmission start symbol, the UE may use a duration from the TX-RX switching period in the previous slot to the symbol immediately before the PSCCH/PSSCH/PSFCH transmission start symbol as the LBT gap.

In an SL slot structure used in licensed bands, only one symbol is used for the TX-RX switching period. However, in unlicensed bands, considering the time gap required for performing LBT, one or more symbols or a specific duration may be set as the TX-RX switching period. In this case, the sensing slot duration required to decrement a back-off counter during the LBT procedure is 9 $\mu$s in absolute time. However, since the length of a symbol may vary depending on the subcarrier spacing (SCS), the number of symbols or the specific duration included in the TX-RX switching period for LBT may differ based on the SCS. Therefore, the number of symbols in the TX-RX switching period or the corresponding duration of the TX-RX switching period for each SCS may be configured by the BS or determined through a (pre-) configuration. For example, the BS may set the TX-RX switching period to 2/4/8 symbols for 15/30/60 kHz SCSs, respectively.

Characteristically, when an SL transmitting UE performs LBT to transmit a specific signal or channel to an SL receiving UE, a necessary time gap may be dynamically indicated through 1st-stage sidelink control information (SCI) or 2nd-stage SCI. In this case, the time gap may be defined in units of symbols. Alternatively, the time gap may be one of the predefined duration candidates. The time gap may also be indicated by assuming the same SCS as that of the transmitted signal or channel. For example, when UE1 transmits a PSFCH for a PSSCH received from UE2, which is scheduled based on an SCS of 15 kHz, through 1st-stage SCI or 2nd-stage SCI, UE2 may indicate to UE1 through the same 1st-stage SCI or 2nd-stage SCI that the time gap required for LBT is a 2-symbol length TX-RX switching period, based on the same SCS as the PSCCH/PSSCH (i.e., 15 kHz).

Since the Tx-Rx switching period is caused by the transmission of the PSCCH/PSSCH/PSFCH, the Tx-Rx switching period may be interpreted as a period for the transmission of the PSCCH/PSSCH/PSFCH. For example, the Tx-Rx switching period may also be considered as a transmission period for the PSCCH/PSSCH/PSFCH.

Similarly, since the AGC period is a preparation period for the transmission of the PSCCH/PSSCH/PSFCH, the AGC period may be interpreted as the transmission period for the PSCCH/PSSCH/PSFCH. For example, the AGC period may also be considered as a period for the PSCCH/PSSCH/PSFCH.

[Method #2] Method of configuring transmission start time to increase probability of LBT success.

As described above, in SL, the position of the transmitting UE is not fixed unlike UL/DL communication between the BS and UE. Therefore, in the configuration of SL resources within a slot, a symbol preceding a PSCCH/PSSCH/PSFCH is used for AGC. In unlicensed bands, performing LBT before all transmissions may be mandatory. If the LBT procedure is not completed before a transmission start symbol, LBT is considered to be failed, and scheduled/allocated transmission may be dropped. Therefore, when Type 1 LBT is performed for SL communication in unlicensed bands (e.g., PSCCH/PSSCH/PSFCH transmission), the opportunities for channel access may be increased by allowing additional transmission start times,

For example, in the SL resource configuration within a slot, additional transmission start times may be configured within an AGC symbol beyond the start boundary of the AGC symbol located before PSCCH/PSSCH/PSFCH symbols, thereby increasing the probability of LBT success. In this case, the number and interval of additional start times within the AGC symbol may vary depending on the SCS. For instance, if the entire AGC symbol is capable of being used for additional transmission start times, three additional transmission start times may be configured in the AGC symbol as follows: before the AGC symbol (Tx opportunity #1); before the second half of the AGC symbol (Tx opportunity #2); and before a symbol after the AGC symbol (Tx opportunity #3) as shown in FIG. 13. Thus, a total of three LBT opportunities may be provided. In this case, the UE performs LBT sequentially from the first opportunity (i.e., from Tx opportunity #1 to Tx opportunity #3). If LBT is successful before the configured transmission start time, the UE may start transmission from the transmission start time using the AGC symbol (or by adding CPE from a symbol immediately after the AGC symbol) and notify other UEs of channel occupancy, thereby avoiding potential transmission collisions. For example, if SL channel transmission starts from the boundary of the symbol immediately after the AGC symbol, and if LBT is successful at Tx opportunity #1 or Tx opportunity #2 shown in FIG. 13, the UE may transmit the CPE from the Tx opportunity where LBT is successful until before the SL channel transmission start time and then transmit the SL channel from the SL channel transmission start time.

If LBT is successful at Tx opportunity #3 in FIG. 13, the LBT success time and the SL channel transmission time are consecutive. Thus, the UE may transmit the SL channel directly without transmitting the CPE.

Additionally, if the UE successfully completes LBT at Tx opportunity #1, the UE does not perform additional LBT at Tx opportunity #2 or #3. Similarly, if LBT is successful at Tx opportunity #2, the UE does not perform LBT at Tx opportunity #3.

In other words, if LBT fails before the first configured SL channel transmission start time (e.g., Tx opportunity #1), the UE may attempt LBT again before the next transmission start time (e.g., Tx opportunity #2). If LBT is successful, the UE may perform the same operation (i.e., CPE transmission) from the corresponding time. However, if LBT is not successful until the last configured start time (e.g., Tx opportunity #3), the scheduled/configured transmission is dropped. As another example, if the AGC symbol is at least partially required, two additional transmission start times may be configured, for example, before the AGC symbol (e.g., Tx opportunity #1) and before the second half of the AGC symbol (e.g., Tx opportunity #2), thereby providing a total of two LBT opportunities.

Considering cases where a certain amount of time is required for AGC settling, as long as the channel access procedure is successful, transmission may be allowed at any point where an AGC symbol greater than or equal to X $\mu$s is capable of being transmitted in a state that transmission of at least X $\mu$s is guaranteed for the AGC symbol. For example, if LBT succeeds at any point before X $\mu$s from the rear boundary of the AGC symbol (i.e., the boundary after the second half of the symbol), SL transmission may be allowed. Otherwise, the SL transmission is dropped.

This method may vary depending on the capability of the UE and may be configured by the BS or (pre-) configured. Additionally, since the length of the AGC symbol may differ depending on the SCS, the additional start time may also be configured differently depending on the SCS.

[Method #3] Method of creating LBT gap for PSFCH transmission within TX-RX switching period.

In unlicensed bands, Type 1 LBT based on random back-off is required before all transmissions. However, in NR-U, for DL, Type 2 LBT, which requires relatively short time, is performed for essential signals such as an SSB as long as a duty cycle is satisfied. If Type 2 LBT is successful, the SSB is allowed to be transmitted. Here, the duty cycle refers to a limitation where the total transmission length within a specific period is restricted to a certain length. For example, the duty cycle may mean that the total transmission length within a period of 100 ms should be below 10 ms.

With the similar motivation, for a PSFCH, which is an important channel for transmitting HARQ-ACK information for a PSSCH received by the UE, the PSFCH may be allowed to be transmitted by performing relatively shorter Type 2 LBT (e.g., Type 2A/2B/2C in Table 9) instead of Type 1 LBT. Alternatively, Type 1 LBT may be converted to Type 2 LBT by always sharing the COT obtained by another UE/BS, thereby performing LBT.

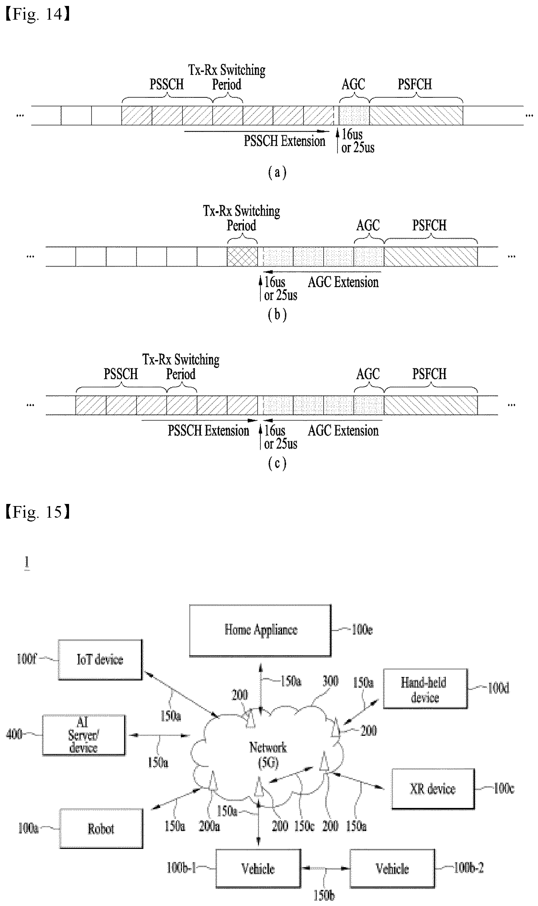

When the PSFCH is transmitted using Type 2 LBT, it is necessary to create an LBT gap required for performing Type 2 LBT. For example, a method of extending transmission of a PSSCH to 25 $\mu$s or 16 $\mu$s immediately before an AGC symbol of a PSFCH within a TX-RX switching period preceding the PSFCH as shown in FIG. 14(a) may be considered. Alternatively, it is also possible to extend the AGC symbol of a PSFCH forward to create a gap of 25 $\mu$s or 16 $\mu$s from the start of a TX-RX switching symbol as shown in FIG. 14(b). As another method, it is also possible to extend the last symbol of a PSSCH while simultaneously extending the AGC symbol of a PSFCH (or using a CPE), thereby creating a gap of 25 $\mu$s or 16 $\mu$s as shown in FIG. 14(c).

In FIG. 14, since a Tx-Rx switching period is caused by transmission of a PSSCH, the Tx-Rx switching period may be interpreted as a period for the transmission of the PSCCH. For example, the Tx-Rx switching period may also be considered as a transmission period for the PSSCH.

Similarly, in FIG. 14, since an AGC period is a preparation period for the transmission of a PSFCH, the AGC period may be interpreted as the transmission period for the PSFCH. For example, the AGC period may also be considered as a period for the transmission of the PSFCH.

As described above, the size of a Type 2 LBT gap for PSFCH transmission may be configured by the BS or (pre-) configured. Alternatively, multiple LBT gap position candidates may be pre-configured. Among the multiple LBT gap position candidates, one LBT gap to be used for PSFCH transmission may be dynamically indicated through 1st-stage SCI or 2nd-stage SCI. In this case, considering a PSSCH to PSFCH timeline, the PSFCH LBT gap indicated through the 1st-stage SCI or 2nd-stage SCI may not be for a PSCCH/PSSCH related to a slot in which the PSFCH is transmitted.

Additionally, a gap of 25 $\mu$s or 16 $\mu$s required for performing Type 2 LBT is an absolute time that does not change based on the SCS. However, since the length of a symbol decreases as the SCS increases, the number of symbols needed to create the 25 $\mu$s or 16 $\mu$s gap may vary depending on the SCS. For example, with an SCS of 15 kHz, the length of one OFDM symbol is approximately 70 $\mu$s, and thus it is feasible to create the 25 $\mu$s gap within a single symbol. However, with an SCS of 60 kHz, the length of one symbol is shorter than 25 $\mu$s, and thus to create the 25 $\mu$s gap, at least two symbols may be required for the TX-RX switching period.

According to [Method #1] and [Method #3] of the present disclosure, an additional duration is not required to create a gap for performing LBT in SL communication. Instead, the LBT gap may be formed by using an existing duration where there is no signal transmission or reception due to the characteristics of SL. By performing LBT through the gap, LBT and SL transmission may be carried out without consuming additional time resources for LBT, enabling more efficient SL transmission.

According to [Method #1], a Tx-Rx switching period and/or AGC period may be used to sufficiently secure the time required for performing Type 1 LBT based on random back-off. Moreover, according to [Method #3], an LBT gap of 25 $\mu$s or 16 $\mu$s may be secured for performing Type 2 LBT. In other words, if the LBT gap becomes unnecessarily large, other UEs and/or the BS may determine that the channel is idle during the LBT gap and then initiate transmission, which may make difficult for the UE to carry out transmission thereof. To prevent such an issue, [Method #3] allows the extension of a PSCCH and/or AGC period to secure an appropriate LBT gap for Type 2 LBT. For example, when the SCS is 15 kHz, the Tx-Rx switching period is 77 μs, which is much larger than 25 μs or 16 μs required for Type 2 LBT. Thus, the UE only needs to use 25 μs or 16 μs of the 77 μs period for Type 2 LBT. However, if another UE and/or the BS transmits during the Tx-Rx switching period before the UE performs Type 2 LBT, the UE may lose opportunities for LBT and sidelink transmission. According to [Method #3], this issue may be resolved, and an appropriate LBT gap for Type 2 LBT may be secured.

According to [Method #2] of the present disclosure, considering the mobility of SL, multiple possible LBT opportunities may be configured within an LBT gap, and LBT may be attempted multiple times, thereby increasing the probability of LBT success and SL transmission.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 15 illustrates a communication system 1 applied to the present disclosure.

Referring to FIG. 15, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

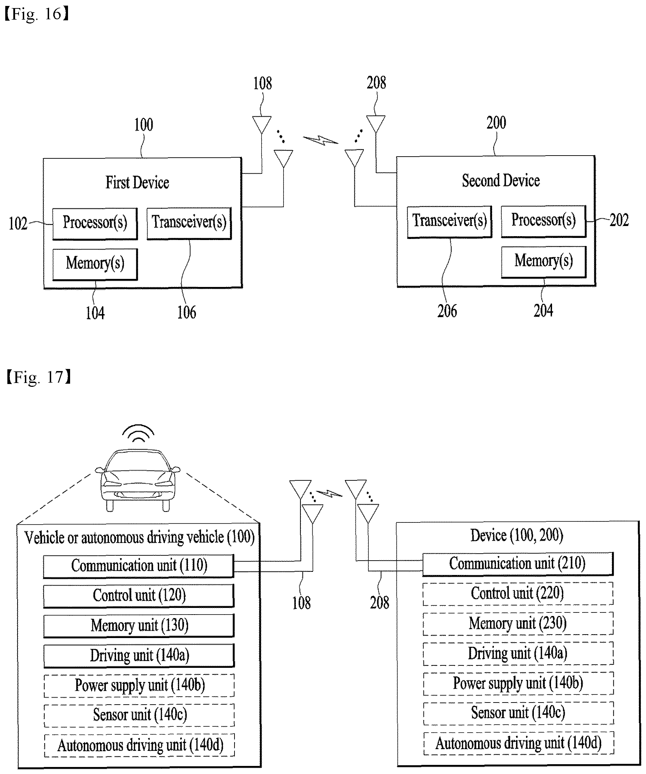

FIG. 16 illustrates wireless devices applicable to the present disclosure.

Referring to FIG. 16, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor 102 of the first wireless device 100 and stored in the memory 104 of the first wireless device 100, according to an embodiment of the present disclosure will be described.

Although the following operations will be described based on a control operation of the processor 102 in terms of the processor 102, software code for performing such an operation may be stored in the memory 104. For example, in the present disclosure, the at least one memory 104 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 102 may perform LBT for SL transmission during an LBT gap. The LBT gap may be configured according to at least one of [Method #1] and [Method #3]. In addition, the processor 102 may perform Type 1 LBT (i.e., Type 1 channel access described above) or Type 2 A/B/C LBT (i.e., Type 2 A/B/C channel access described above) during the LBT gap.

The processor 102 may transmit an SL channel through the transceiver 106 based on the success of the LBT. For example, the SL channel may be transmitted based on [Method #2].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor 202 of the second wireless device 100 and stored in the memory 204 of the second wireless device 200, according to an embodiment of the present disclosure will be described.

Although the following operations will be described based on a control operation of the processor 202 in terms of the processor 202, software code for performing such an operation may be stored in the memory 204. For example, in the present disclosure, the at least one memory 204 may be a computer-readable storage medium and may store instructions or programs. The instructions or programs may cause, when executed, the at least one processor operably connected to the at least one memory to perform operations according to embodiments or implementations of the present disclosure, related to the following operations.

For example, the processor 202 may receive an SL channel transmitted by a transmitting UE through the transceiver 206.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

FIG. 17 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

While the above-described method of transmitting and receiving a signal in a U-band and an apparatus therefor have been mainly described as examples applied to a 5G New RAT system, the method and apparatus may also be applied to various wireless communication systems in addition to the 5G New RAT system.

**Claims**

1.  A method of transmitting a physical sidelink feedback channel (PSFCH) by a user equipment (UE) in a wireless communication system, the method comprising:

      receiving a physical sidelink control channel (PSCCH);

receiving a first physical sidelink shared channel (PSSCH) based on the PSCCH;

performing listen-before-talk (LBT) during an LBT gap; and

transmitting a PSFCH related to the first PSSCH based on a success of the LBT,

wherein the LBT gap is located immediately before an earliest symbol among symbols for the PSFCH,

wherein transmission of a second PSSCH continues from a symbol immediately after a last symbol among symbols for the second PSSCH transmitted by the UE before the PSFCH until the LBT gap.

2. The method of claim 1, wherein a length of the LBT gap is pre-configured or corresponds to one of a plurality of LBT gap lengths, which is indicated by sidelink control information (SCI) included in the PSCCH.

3. The method of claim 1, wherein the LBT gap is included within a transmission-reception (Tx-Rx) switching period for the second PSSCH.

4. The method of claim 3, wherein a number of symbols included in the Tx-Rx switching period is determined based on a length of the LBT gap and a subcarrier spacing (SCS) of the symbols included in the Tx-Rx switching period.

5. The method of claim 1, wherein the LBT is performed within a channel occupancy time (COT) obtained by a base station or another UE.

6. The method of claim 1, wherein a length of the LBT gap is one of lengths for Type 2 LBT.

7. A user equipment (UE) configured to transmit a physical sidelink feedback channel (PSFCH) in a wireless communication system, the UE comprising:

at least one transceiver;

at least one processor; and

at least one memory operatively connected to the at least one processor and storing instructions that, when executed, cause the at least one processor to perform operations:

receiving, through the at least one transceiver, a physical sidelink control channel (PSCCH);

receiving, through the at least one transceiver, a first physical sidelink shared channel (PSSCH) based on the PSCCH;

performing listen-before-talk (LBT) during an LBT gap; and

transmitting, through the at least one transceiver, a PSFCH related to the first PSSCH based on a success of the LBT,

wherein the LBT gap is located immediately before an earliest symbol among symbols for the PSFCH,

wherein transmission of a second PSSCH continues from a symbol immediately after a last symbol among symbols for the second PSSCH transmitted by the UE before the PSFCH until the LBT gap.

8. The UE of claim 7, wherein a length of the LBT gap is pre-configured or corresponds to one of a plurality of LBT gap lengths, which is indicated by sidelink control information (SCI) included in the PSCCH.

9. The UE of claim 7, wherein the LBT gap is included within a transmission-reception (Tx-Rx) switching period for the second PSSCH.

10. The UE of claim 9, wherein a number of symbols included in the Tx-Rx switching period is determined based on a length of the LBT gap and a subcarrier spacing (SCS) of the symbols included in the Tx-Rx switching period.

11. The UE of claim 7, wherein the LBT is performed within a channel occupancy time (COT) obtained by a base station or another UE.

12. The UE of claim 7, wherein a length of the LBT gap is one of lengths for Type 2 LBT.

13. An apparatus configured to transmit a physical sidelink feedback channel (PSFCH) in a wireless communication system, the apparatus comprising:

at least one processor; and

at least one memory operatively connected to the at least one processor and storing instructions that, when executed, cause the at least one processor to perform operations:

receiving a physical sidelink control channel (PSCCH);
receiving a first physical sidelink shared channel (PSSCH) based on the PSCCH;
performing listen-before-talk (LBT) during an LBT gap; and
transmitting a PSFCH related to the first PSSCH based on a success of the LBT,
wherein the LBT gap is located immediately before an earliest symbol among symbols for the PSFCH,
wherein transmission of a second PSSCH continues from a symbol immediately after a last symbol among symbols for the second PSSCH transmitted by the UE before the PSFCH until the LBT gap.

14. A computer-readable storage medium comprising at least one computer program that causes at least one processor to perform operations comprising:

receiving a physical sidelink control channel (PSCCH);
receiving a first physical sidelink shared channel (PSSCH) based on the PSCCH;
performing listen-before-talk (LBT) during an LBT gap; and
transmitting a PSFCH related to the first PSSCH based on a success of the LBT,
wherein the LBT gap is located immediately before an earliest symbol among symbols for the PSFCH,
wherein transmission of a second PSSCH continues from a symbol immediately after a last symbol among symbols for the second PSSCH transmitted by the UE before the PSFCH until the LBT gap.

15. A method of receiving a physical sidelink feedback channel (PSFCH) by a user equipment (UE) in a wireless communication system, the method comprising:

transmitting a physical sidelink control channel (PSCCH);
transmitting a first physical sidelink shared channel (PSSCH) based on the PSCCH; and
receiving a PSFCH related to the first PSSCH,
wherein the PSFCH is received based on a success of listen-before-talk (LBT) performed during an LBT gap located immediately before an earliest symbol among symbols for the PSFCH,
wherein transmission of a second PSSCH continues from a symbol immediately after a last symbol among symbols for the second PSSCH transmitted by another UE before the PSFCH until the LBT gap, and
wherein the other UE transmits the PSFCH.

16. A user equipment (UE) configured to receive a physical sidelink feedback channel (PSFCH) in a wireless communication system, the UE comprising:

at least one transceiver;
at least one processor; and
at least one memory operatively connected to the at least one processor and storing instructions that, when executed, cause the at least one processor to perform operations:

transmitting, through the at least one transceiver, a physical sidelink control channel (PSCCH);
transmitting, through the at least one transceiver, a first physical sidelink shared channel (PSSCH) based on the PSCCH; and
receiving, through the at least one transceiver, a PSFCH related to the first PSSCH,
wherein the PSFCH is received based on a success of listen-before-talk (LBT) performed during an LBT gap located immediately before an earliest symbol among symbols for the PSFCH,
wherein transmission of a second PSSCH continues from a symbol immediately after a last symbol among symbols for the second PSSCH transmitted by another UE before the PSFCH until the LBT gap, and
wherein the other UE transmits the PSFCH.

【Fig. 1】

(a) Carrier aggregation between L-band and U-band

(b) Standalone U-band(s)

【Fig. 2】

【Fig. 3】

【Fig. 4】

【Fig. 5】

【Fig. 6】

BS (e.g. eNB or gNB)

UE1    UE2

【Fig. 7】

(a)    (b)

【Fig. 8】

(a)       (b)       (c)

● : Transmitting UE

◎ : Receiving UE

【Fig. 9】

: DM-RS  : AGC  : Tx-Rx Switching Time

【Fig. 10】

Perform LBT for SL transmission
during LBT gap          S1001

Transmit SL channel
based on success of LBT          S1003

【Fig. 11】

Receive SL channel          S1101

【Fig. 12】

【Fig. 13】

【Fig. 14】

PSSCH

Tx-Rx Switching
Period

AGC   PSFCH

...   ...

PSSCH Extension   16us
or 25us

(a)

Tx-Rx Switching
Period

AGC   PSFCH

...   ...

16us   AGC Extension
or 25us

(b)

PSSCH

Tx-Rx Switching
Period

AGC   PSFCH

...   ...

PSSCH Extension   16us   AGC Extension
or 25us

(c)

【Fig. 15】

1

【Fig. 16】

【Fig. 17】

## INTERNATIONAL SEARCH REPORT

| | International application No. |
|---|---|
| | **PCT/KR2023/005656** |

### A. CLASSIFICATION OF SUBJECT MATTER

**H04W 74/08**(2009.01)i; **H04L 5/00**(2006.01)i; **H04L 5/14**(2006.01)i; **H04L 1/18**(2006.01)i; **H04W 4/40**(2018.01)i; **H04W 52/52**(2009.01)i; **H04L 27/00**(2006.01)i

According to International Patent Classification (IPC) or to both national classification and IPC

### B. FIELDS SEARCHED

Minimum documentation searched (classification system followed by classification symbols)

H04W 74/08(2009.01); H04L 27/26(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PSFCH(Physical Sidelink Feedback CHannel), 제1-제2 PSSCH(first and second Physical Sidelink Shared CHannels), LBT 갭(Listen Before Talk gap), 심볼(symbol), 지속(continue), 스위칭 구간(switching duration)

### C. DOCUMENTS CONSIDERED TO BE RELEVANT

| Category* | Citation of document, with indication, where appropriate, of the relevant passages | Relevant to claim No. |
|---|---|---|
| A | WO 2021-237515 A1 (QUALCOMM INC.) 02 December 2021 (2021-12-02)<br>See paragraphs [0035]-[0122]; and figures 6-8. | 1-16 |
| A | WO 2021-217484 A1 (QUALCOMM INC.) 04 November 2021 (2021-11-04)<br>See paragraphs [0054]-[0107]; and figure 8. | 1-16 |
| A | WO 2021-223072 A1 (QUALCOMM INC.) 11 November 2021 (2021-11-11)<br>See paragraphs [0072]-[0081]; and figure 4. | 1-16 |
| A | ZTE et al. NR sidelink physical layer structure. R1-1908894, 3GPP TSG RAN WG1 Meeting #98. Prague, CZ. 17 August 2019.<br>See pages 5-9. | 1-16 |
| A | CATT. Physical layer structure for NR sidelink. R1-1908579, 3GPP TSG RAN WG1 Meeting #98. Prague, CZ. 17 August 2019.<br>See pages 12-16. | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **27 July 2023** | **28 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005656**

| Patent document cited in search report | | | Publication date (day/month/year) | Patent family member(s) | | | Publication date (day/month/year) |
|---|---|---|---|---|---|---|---|
| WO | 2021-237515 | A1 | 02 December 2021 | CN | 115669170 | A | 31 January 2023 |
| | | | | EP | 4158982 | A1 | 05 April 2023 |
| | | | | US | 2023-0171807 | A1 | 01 June 2023 |
| WO | 2021-217484 | A1 | 04 November 2021 | None | | | |
| WO | 2021-223072 | A1 | 11 November 2021 | None | | | |

Form PCT/ISA/210 (patent family annex) (July 2022)